# EUROPEAN PATENT SPECIFICATION

(11) **EP 2 396 390 B1**
(45) Date of publication and mention of the grant of the patent: **05.10.2016**
(21) Application number: 10706907.2
(22) Date of filing: 11.02.2010
(51) Int. Cl.: C10L 1/12, C10L 1/02, C10L 1/182, C10L 11/04, C10L 1/18, C10L 1/185, C10L 1/188, C10L 1/19, C10L 1/198, C10L 1/20, C10L 1/228, C10L 1/23, C10L 1/232, C10L 1/24, C10L 1/30

(54) **USE OF A COMPOSITION AS LAMP FUEL**
VERWENDUNG EINER ZUSAMMENSETZUNG ALS LAMPENBRENNSTOFF
UTILISATION D'UNE COMPOSITION EN TANT QUE COMBUSTIBLE POUR LAMPE

(30) Priority: 11.02.2009 DK 200900197; 25.02.2009 US 155216 P; 03.06.2009 DK 200900694; 01.07.2009 US 222155 P; 01.07.2009 DK 200970051; 05.08.2009 DK 200970078
(43) Date of publication of application: 21.12.2011
(73) Proprietor: Agowa IP APS, 7900 Nykøbing M (DK)
(72) Inventor: KRAGH MØLLER, Kristian, DK-8320 MÅRSLET (DK); PEDERSEN, Per Henry, DK-9575 Terndrup (DK)
(74) Representative: Høiberg A/S
(86) International application number: PCT/DK2010/050037
(87) International publication number: WO 2010/091690

(56) References cited:
- EP-A- 1 323 812
- EP-A- 1 923 453
- EP-A1- 1 149 888
- EP-A2- 0 874 038
- WO-A-2007/061903
- WO-A1-2007/079765
- DE-A1- 19 700 161
- DE-A1-102006 017 105
- DE-C1- 4 333 418
- US-A1- 2004 025 418
- US-A1- 2005 115 145
- US-A1- 2008 014 539
- EDMUND W LUSAS: "CHAPTER 8: Animal and Vegetable Fats, Oils, and Waxes" 1 January 2003 (2003-01-01), 20030101, PAGE(S) 243 - 328 , XP009132709 ISBN: 978-0-306-47411-8 pages 250-251 pages 319-321
- GERHARD KNOTHE: "Designer Biodiesel: Optimizing Fatty Ester Composition to Improve Fuel Properties" ENERGY & FUELS, THE SOCIETY, WASHINGTON, DC, US LNKD- DOI:10.1021/EF700639E, vol. 22, no. 2, 1 January 2008 (2008-01-01), pages 1358-1364, XP007913530 ISSN: 0887-0624 [retrieved on 2008-02-19]
- MCCRADY J ET AL: "Investigations in the application of butanol as a diesel fuel" AMERICAN SOCIETY OF AGRICULTURAL AND BIOLOGICAL ENGINEERS ANNUAL INTERNATIONAL MEETING 2008,, vol. 11, 29 June 2008 (2008-06-29), pages 6722-6733, XP009115776 ISBN: 978-1-60560-536-4
- VERHÉ ET AL: "Production of Biodiesel from Waste Lipids" 1 January 2009 (2009-01-01), BIOFUELS, WILEY, GB LNKD- DOI:10.1002/9780470754108.CH9, PAGE(S) 153 - 170 , XP007914862 ISBN: 978-0-470-02674-8 the whole document
- Anonymous: "Small scale production of biodiesel" 3 December 2007 (2007-12-03), XP002600608 Retrieved from the Internet: URL:http://web.archive.org/web/20080415104 745/http://www.chemistryland.com/Biodiesel /SmallScale/SmallScaleProductionBiodiesel. htm [retrieved on 2010-09-13]

## Description

### Field of invention

The present disclosure relates to a non-petroleum fuel composition based on alkyl esters of a vegetable oil. The provided composition comprises a base formulation of one or more alkyl esters of a carboxylic acid, in particular, one or more alkyl esters of a C₆-C₁₆ carboxylic acid or mixtures thereof. The alkyl esters of the composition are preferably derived from renewable sources such as vegetable oil. Moreover, uses for the composition are provided as well as methods for production thereof. The composition is particularly suitable for use as lamp fuel.

### Background of invention

Conventional fuel compositions, such as lamp fuels are based on kerosene/paraffin or petrol. These fuel compositions suffer from the major drawback that they are highly toxic, especially upon ingestion. Even the slightest quantities of these dangerous fuels are sufficient to give heavy lung damages. Children are especially at risk, because infants often do not understand that for example lamp fuel is dangerous, and sometimes drink the lamp fuel directly out of oil lamps. Paraffin or kerosene arrive easily into the lungs, where it can cause chemical pneumonia, which in worst cases may even be mortal.

Chemical pneumonia or chemical pneumonitis is inflammation of the lung that may be caused by ingested gasoline or other petroleum distillates, such as lamp oils or lamp fuels. Chemical pneumonia or Chemical pneumonitis is an unusual type of lung irritation. Pneumonia usually is caused by a bacteria or virus, however, in chemical pneumonia, inflammation of lung tissue is from poisons or toxins. Signs and symptoms of chemical pneumonia vary greatly, but commonly include burning of the nose, eyes, lips, mouth, and throat, dry cough, wet cough producing clear, yellow, or green mucus, cough producing blood or frothy pink matter in your spit, nausea or abdominal pain, chest pain, shortness of breath, painful breathing or pleuritis (an inflammation of the outside covering of the lungs), headache, flu symptoms, weakness or a general ill feeling, delirium or disorientation, signs a doctor might observe, rapid or shallow breaths, rapid pulse, oral, nasal, or skin burns, pale or cyanotic skin and lips, much sweating, altered thinking and reasoning skills, unconsciousness, swelling of eyes or tongue, hoarse or muffled voice, chemical odours on other areas of the body, frothy spit from a cough, and/or fever.

Thus far, the problem of infants poisoned from drinking lamp fuel directly out of oil lamps, torches etc. has been addressed by providing "children-proof" oil lamps and torches which are constructed in a manner such that children can not open the device, and therefore can not drink the fuel from the fuel container.

In the present disclosure, a new route has been followed to address the problem of toxic lamp fuels. The present disclosure provides a "children-proof" non-petrol/non-paraffin lamp oil, which is based on refined vegetable oil, and therefore is non-toxic to ingest. The fuel compositions of the present disclosure are thus based on pure vegetable ingredients. In contrast to conventional lamp fuels, the fuel compositions of the present invention has the further advantages that its combustion products are harmless and do not create pollutants Less soot, whereby it is much more hygienic for general use than conventional paraffin or kerosene based fuel compositions. Therefore, the fuel compositions of the present disclosure are renewable, CO2-neutral and safe. The lamp fuel of the present invention may replace conventional lamp fuels as well as other fuel compositions, thereby avoiding the negative aspects of petrol-based fuel compositions.
DE 197 00 161 proposes the use of C₆-C₂₂ methyl esters as lamp fuel. EP 0 874 038 proposes the use of fatty derivatives having a solidification temperature below 0°C, an iodine value below 20 and a surface tension greater than 25 mN/m.

### Summary of invention

The present disclosure relates to a non-toxic fuel composition, which is based on a vegetable oil. In one aspect, the present disclosure relates to use of a composition comprising a base formulation of one or more alkyl esters of a C₆-C₁₆ carboxylic acid or mixtures thereof as a fuel composition. The composition is in specific embodiments used as a lamp oil, such as a lamp oil for indoor and/or outdoor use.
In one embodiment, the composition comprises one or more methyl esters of C₈-C₁₀ carboxylic acids, such as by weight 10-80% C₈ alkyl esters, 10-80% C₁₀ alkyl esters, 10-70% C₁₂ alkyl esters, and/or 0-40% C₁₄ alkyl esters, or the composition for example comprises by weight 35-45% C₈ alkyl esters, 25-35% C₁₀ alkyl esters, 15-25% C₁₂ alkyl esters, and/or 5-15% C₁₄ alkyl esters, or for example by weight 15-25% C₈ alkyl esters, 10-20% C₁₀ alkyl esters, 45-55% C₁₂ alkyl esters, and/or 15-25% C₁₄ alkyl esters. Preferably at least 80% of the alkyl esters are fully saturated.
The compositions claimed for use as a lamp fuel composition has a melting point of less than 0 °C; and the composition is preferably liquid at least in the temperature range from 0-100 °C, such as 0-80 °C, for example 0-60 °C. The composition has in certain embodiments a viscosity, which is less than 10 cPoise (cP), such as less than 5 cP, such as less than 4 cP, for example less than 3 cP, such as less than 2.5 cP, for example less than 2 cP, such as less than 1.5 cP, for example less than 1 cP, preferably between 5 and 0 cP, for example between 4 and 1 cP, such as between 3 and 1.5 cP, such as between 2.5 and 1.5 cP.
The alkyl esters of the used composition are methyl esters, preferably methyl octanate, methyl decanoate and/or mixtures thereof.
In another embodiment, the compositions disclosed herein for use according to the present disclosure further comprises an alcohol, for example between 0.5 and 5 % by weight alcohol. The alcohol is for example selected independently from the group consisting of alcohols such as dichloromethane, butyl acetate, acetone, acetonitrile, ethyl acetate, methanol, ethanol, propyl alcohol, isopropyl alcohol, butyl alcohol (butanol), isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; and glycols such as propylene glycol, ethylene glycol, dipropylene glycol, glycerol, diethylene glycol, tri-ethylene glycol, trimethylene glycol, hexylene glycol, butylenes glycol, 1,3-butanediol, thiodiethylene glycol, ammonium thioglycolate, cefatrizine glycol, polypropylene glycol, propylene glycol alginate; dichloromethane, butyl acetate, acetone, acetonitrile, and ethyl acetate. Preferably, the alcohol comprises one to six carbon atoms, and is for example selected from the group consisting of methanol, ethanol, propanol, butanol, pentanol, hexanol, and mixtures thereof, such as methanol, ethanol, propanol and/or butanol, for example the alcohol is ethanol, methanol and/or butanol.

In a specific embodiment, the present invention relates to the use of a composition comprising by weight 35-45% C₈ alkyl esters, 25-35% C₁₀ alkyl esters, 15-25% C₁₂ alkyl esters, and/or 5-15% C₁₄ alkyl esters as an indoor lamp fuel. In another specific embodiment, a composition comprising by weight 15-25% C₈ alkyl esters, 10-20% C₁₀ alkyl esters, 45-55% C₁₂ alkyl esters, and/or 15-25% C₁₄ alkyl esters is claimed for use as an outdoor lamp fuel.

### Description of drawings

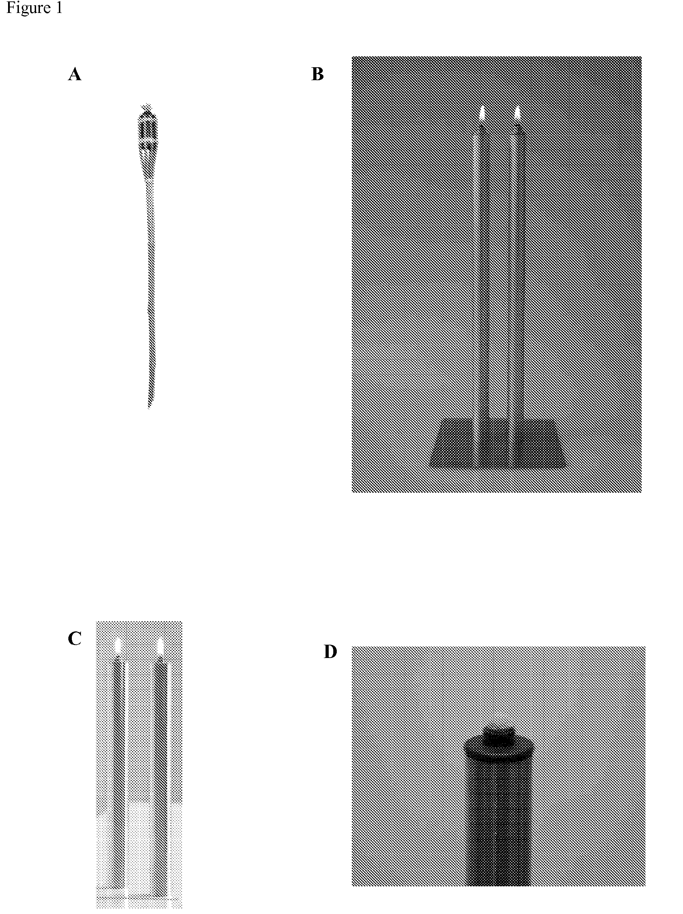

Figure 1: Examples of oil lamps and torches, which may be fuelled with a lamp fuel composition of the present invention. Panel A shows a bamboo torch; panel B shows a Mag. oilstick; C is a Mag. Simplicity; and D shows a black top torch.

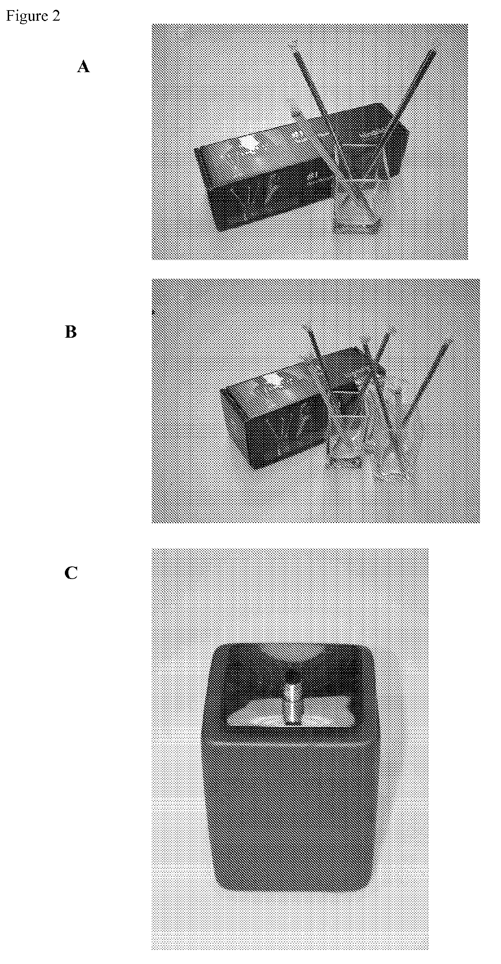

Figure 2: Examples of stix oil lamps, which may be fuelled with a lamp fuel composition of the present invention. Panel A is a 14 cm stix oil lamp; panel B is a 19 cm stix oil lamp; panel C shows a Menu oil lamp.
Figure 3: A. Set-up of all indoor lamps with a lamp oil of the present invention, B. Outdoor lamp with a lamp oil of the present invention setup for particle collection, C. Outdoor lamp with conventional paraffin based lamp oil setup for particle collection

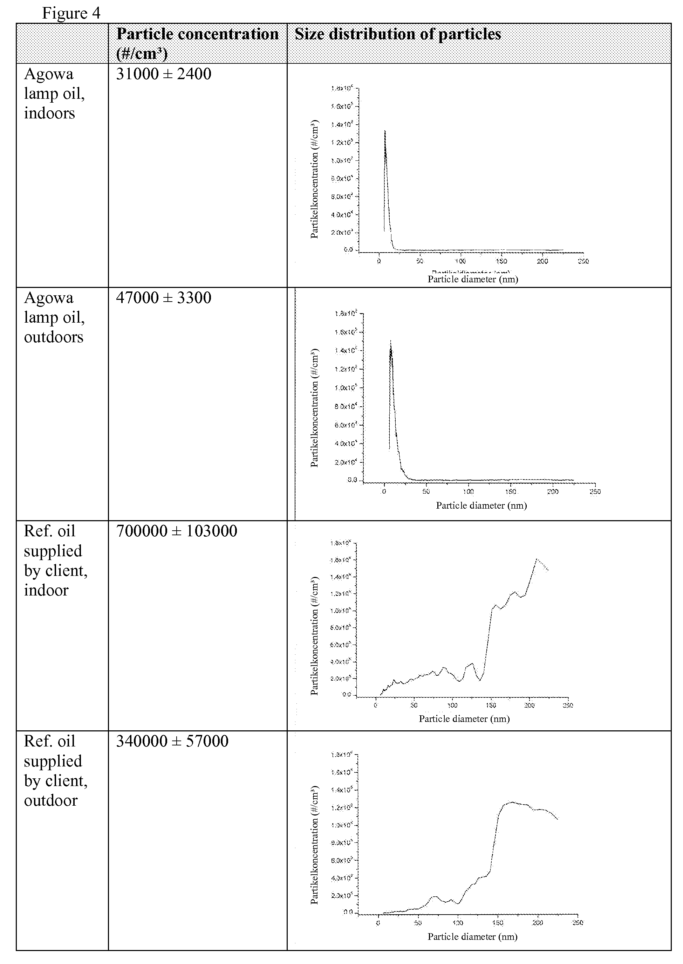

Figure 4: Particle concentration and size distribution.

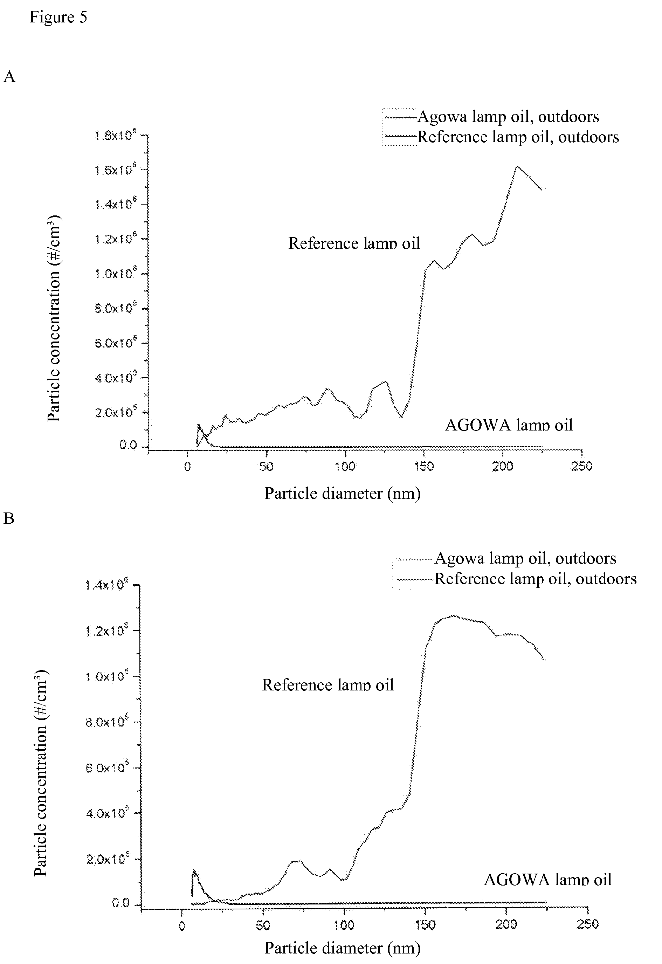

Figure 5: A. Comparison of particle concentration in the range 5-225 nm for a lamp oil of the present disclosure and the paraffin based conventional reference lamp oil used for indoor lamps. B Comparison of particle concentration in the range 5-225 nm for a lamp oil of the present disclosure and the paraffin based conventional reference lamp oil used for outdoor lamps.

### Detailed description of the invention

The present invention relates to a fuel composition, which is not based on petrol, kerosene or paraffin. In the fuel compositions of the present invention, the dangerous petrol/kerosene/paraffin component is replaced by methyl esters of carboxylic acids from vegetable oil or biodiesel. Thus, in one aspect, the present disclosure relates to a fuel composition comprising a base formulation of one or more alkyl esters of a C₆-C₁₆ carboxylic acid or mixtures thereof, and the use of said composition as a fuel, such as a lamp fuel. The terms "lamp fuel" and "lamp oil" are used synonymously herein and refers to a fuel for oil lamps.

In another broad aspect, the present disclosure relates to a composition comprising fatty acid derivatives of refined vegetable oil, and optionally at least one fuel supporter. The composition of the present disclosure is a flammable liquid that releases energy in the form of light and/or heat when hydrocarbons burn.

The term an "ester" as used herein refers to a chemical compound derived formally from an oxoacid (one containing an oxo group, X=O), and a hydroxyl compound such as an alcohol or phenol. In the present disclosure, the ester compounds are preferably formed by a reaction between a carboxylic acid/fatty acid, as defined herein below and an alcohol, preferably an alcohol comprising 1 to 6 carbon atoms. The chemical reaction of forming an ester from an alcohol and an acid, such as a carboxylic acid, is referred herein to as "esterification"
A general formula of a carboxylic acid ester, wherein R and R' denote any alkyl or aryl group is 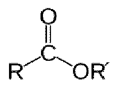 In the compositions claimed in the present disclosure, the R group is preferably the aliphatic chain of a carboxylic acid, such as a C₆-C₁₆ aliphatic chain, and R' is a C₁-C₆ chain, i.e. preferably a methyl, ethyl, propyl, butyl, pentyl, or a hexyl group. In general, the R' group is herein referred to as an alkyl group, and this alkyl group is preferrably methyl or ethyl.
The term "transesterification" refers to the process of exchanging the organic group R" of an ester with the organic group R' of an alcohol. These reactions may be catalyzed by the addition of an acid or base.

The term "base formulation" as used herein refers to a formulation of one or more alkyl esters of a carboxylic acid, as defined herein. The base formulation comprises specific alkyl esters or mixtures thereof as designated herein below. In particular, the base formulation as defined herein is comprised in the compositions of the present disclosure. However, the composition may further comprise one or more additional components, such that the composition e.g. comprises 90% of a base formulation, while the remaining 10 % of the composition is constituted by one or more additional components, such as an alcohol, other additives and/or residuals.

### Carboxylic acid/Fatty acid

In one aspect, the disclosure relates to a fuel composition comprising a base formulation of one or more alkyl esters of a carboxylic acid. For example, the disclosure relates to a fuel composition comprising a. a base formulation of one or more alkyl esters of a carboxylic acid or mixtures thereof, and/or b. one or more alkyl esters of a vegetable oil, such as a refined vegetable oil, wherein said vegetable oil is preferably refined by bleaching/extensive bleaching.
In another aspect, the present disclosure relates to a fuel composition comprising a base formulation of one or more alkyl esters of a C₆-C₁₆ carboxylic acid or mixtures thereof, and the use of said composition as a fuel, such as a lamp fuel.
The carboxylic acid is also sometimes referred to as a fatty acid, and the carboxylic acid of the present invention comprise any organic acid with the general formula R-COOH, wherein R represents a side chain/substituent. A carboxylic acid of the present invention includes saturated and non-saturated forms, straight unbranched chains and branched side chains, as well as monocarboxylic acids and multicarboxylic acids, such as di- and tri-carboxylic acids. In a preferred embodiment, the composition of the present invention, claimed for use as a lamp fuel, comprises one or more alkyl esters of C₈-C₁₀ carboxylic acids.

In one embodiment, the disclosure relates to a fuel composition comprising a. a base formulation of one or more alkyl esters of a C₂-C₁₂ carboxylic acid or mixtures thereof, and/or b. one or more alkyl esters of a vegetable oil. In another embodiment, the base formulation of the composition of the present disclosure comprises one or more alkyl esters of a C₂-C₂₀ carboxylic acid. In a specific embodiment, the base formulation comprises one or more alkyl esters of a C₄-C₁₂ carboxylic acid, such as a C₄-C₁₀ carboxylic acid, or more preferred a, C₆-C₈ carboxylic acid, and/or mixtures thereof.

Examples of carboxylic acids are provided in table 1 below, and in one embodiment, the one or more alkyl ester of the present disclosure is one or more alkyl ester of a carboxylic acid selected from the group set out in table 1, or mixtures thereof.

**Table 1. list of saturated carboxylic acids**

| **Systematic name** | **Trivial name** | **Shorthand designation** | **Molecular wt.** | **Melting point (°C)** |
|---|---|---|---|---|
| butanoic | butyric | 4:0 | 88.1 | -7.9 |
| pentanoic | valeric | 5:0 | | |
| hexanoic | caproic | 6:0 | 116.1 | -3.4 |
| octanoic | caprylic | 8:0 | 144.2 | 16.7 |
| nonanoic | pelargonic | 9:0 | 158.2 | 12.5 |
| decanoic | capric | 10:0 | 172.3 | 31.6 |
| dodecanoic | lauric | 12:0 | 200.3 | 44.2 |
| tetradecanoic | myristic | 14:0 | 228.4 | 53.9 |
| hexadecanoic | palmitic | 16:0 | 256.4 | 63.1 |
| heptadecanoic | margaric (daturic) | 17:0 | 270.4 | 61.3 |
| octadecanoic | stearic | 18:0 | 284.4 | 69.6 |
| eicosanoic | arachidic | 20:0 | 312.5 | 75.3 |

Thus, in one embodiment, the base formulation of the composition of the present disclosure comprise alkyl butanoate ester, alkyl pentanoate, alkyl hexanoate, alkyl octanoate, alkyl nonanoate, alkyl decanoate, alkyl dodecanoate, alkyl tetradecanoate, alkyl hexadecanoate, alkyl heptadecanoate, alkyl octadecanoate, alkyl eicosanoate and/or mixtures thereof. In a preferred embodiment, the base formulation of the composition comprises alkyl butanoate ester, alkyl pentanoate, alkyl hexanoate, alkyl octanoate, alkyl nonanoate, alkyl decanoate and/or mixtures thereof. In a more preferred embodiment, the base formulation of the composition comprises alkyl butanoate ester, alkyl pentanoate, alkyl hexanoate, alkyl octanoate and/or mixtures thereof. In another preferred embodiment, the base formulation of the composition comprises alkyl hexanoate, alkyl octanoate and/or mixtures thereof. In another preferred embodiment, the base formulation comprises an alkyl ester of a C₁₈ carboxylic acid, such as alkyl linoleate, alkyl linolenate and/or mixtures thereof.

Preferred fatty acids for production of a fuel composition/lamp fuel of the present invention are listed in table 2 below.

**Table 2. Physical characteristics of preferred carboxylic acids.**

| Name | Source | Amount in composition | Melting point, Centigrade °C | Boiling point °C at 4 mm Hg | Flash point, centigrade °C | Viscosity |
|---|---|---|---|---|---|---|
| C4 *n*-Butanoic acid | Primary source is Milk fat | 100 % | -8 | 164 | - | not available |
| C6 Caproic Acid | Primary source cocao butter or soya bean oil | 100 % | -52 | 152 | 63 | Appr.. 2 cps |
| C8 Caprylic acid | Primary source palmkernal oil or cocunot oil | 100 % | -38 | 204 | 90 | <10 cps |
| C10 capric acid (decanoic acid) | Primary source palmkernal oil or cocunot oil | 100 % | 7 | 233 | 82 | 13 cps at 22°C |
| C18:2 Linoleic acid | not available | | | | | |
| C18:3 Linolenic acid | not available | | | | | |
| Refined vegetable oils, for example hydrolysed | Primary source rapeseed oil or canola oil, soy bean oil, sunflower, olive oil, Jathrofa oil. However, other sources are also applicable | 100 % | Depends on oil type +10--20 | | above 110 | Depends on oil type 3-9cps |

The most preferred carboxylic acid of the present invention is C₈-C₁₀ carboxylic acids or mixtures thereof.

The components of the compositions of the present invention are preferably prepared from renewable sources, such as plant-derived, vegetable oils. The methyl esters are isolated from the vegetable oil by conventional methods, as described herein below, for example by degumming, bleaching, and/or distillation of the vegetable oil. The carboxylic acids are esterified or transesterified by reaction with methanol.

The composition claimed for use as a lamp fuel according to the present invention comprises one or more methyl esters of C₈-C₁₀ carboxylic acids. The composition comprises by weight 30-90% of one or more C₈-C₁₀ methyl esters.

In a preferred embodiment, the composition of the present disclosure comprises by weight 10-80% C₈ alkyl esters, 10-80% C₁₀ alkyl esters, 10-70% C₁₂ alkyl esters, and/or 0-40% C₁₄ alkyl esters, or the composition for example comprises by weight 35-45% C₈ alkyl esters, 25-35% C₁₀ alkyl esters, 15-25% C₁₂ alkyl esters, and/or 5-15% C₁₄ alkyl esters, or for example by weight 15-25% C₈ alkyl esters, 10-20% C₁₀ alkyl esters, 45-55% C₁₂ alkyl esters, and/or 15-25% C₁₄ alkyl esters.

The aliphatic chains of the alkyl esters of the present disclosure are preferably saturated, and for example, at least 30%, such as at least 40%, at least 50%, at least such as at least 60%, at least 70%, such as at least 80%, such as at least 90%, such as at least 95% of the alkyl esters are fully saturated. It is appreciated by those of skill in the art, that the length of the alkyl esters and the extent of saturation of the alkyl esters affects important features of a fuel such as a lamp fuel, for example melting point, viscosity, soot emission, and flash point. Therefore, the length of the alkyl esters, and the extent of saturation which results in a composition suitable as a lamp oil will be appreciated by those of skill in the art, based on the teachings provided herein in respect of viscosity, melting point, temperature range of liquid state, soot emission and flash point.

In particular, the present disclosure does not relate to the use of fatty acid derivatives with a solidification point below 0°C, an iodine value below 20 and a surface tension of more than 25 mN/m as lamp oils. Thus, the present disclosure relates in one embodiment relates to the use of a composition comprising a base formulation of one or more alkyl esters of a C₆-C₁₆ carboxylic acid or mixtures thereof as a lamp fuel, provided that the composition is not fatty acid derivatives with a solidification point below 0°C, an iodine value below 20 and a surface tension of more than 25 mN/m, or does not comprise fatty acid derivatives with a solidification point below 0°C, an iodine value below 20 and a surface tension of more than 25 mN/m.

The alkyl esters of the used composition are in one embodiment selected from the group consisting of methyl ester, ethyl ester, propyl ester, butyl ester and mixtures thereof, such as selected from the group consisting of methyl ester, ethyl ester, and mixtures thereof, preferably the alkyl ester is a methyl ester, and the alkyl ester is preferably methyl octanate, methyl decanoate, methyl dodecanoate, methyl tetradecanoate and/or mixtures thereof. Alternatively, the alkyl ester is an ethyl ester, and the alkyl ester is preferably ethyl octanate, ethyl decanoate, ethyl dodecanoate, ethyl tetradecanoate and/or mixtures thereof.

The term "alkyl", as used herein, unless otherwise specified, refers to a saturated straight, branched, or cyclic hydrocarbon having 1 to 6 carbon atoms, and includes for example methyl, ethyl, propyl, isopropyl, butyl, isobutyl, t-butyl, pentyl. cyclopentyl, isopentyl, neopentyl, hexyl, isohexyl, cyclohexyl, 3-methylpentyl, 2,2-dimethylbutyl, and 2,3-dimethylbutyl. Thus, the alkyl group of the carboxylic esters of the present invention comprise any alkyl group, but preferably an alkyl group comprising 6 or less carbon atoms; i.e. methyl, ethyl, propyl, buthanyl, pentanyl and/or hexanyl. Thus, the esters of the base formulation disclosed herein are selected from the group consisting of methyl ester, ethyl ester, propyl ester, buthanyl ester, pentanyl ester, and/or hexanyl ester. In a preferred embodiment, the alkyl group is selected from the group consisting of methyl, ethyl, propyl, butyl, and mixtures thereof, and most preferred the alkyl group is selected from the group consisting of methyl, ethyl and mixtures thereof.

In one embodiment, the alkyl esters of the composition claimed for use according to the present invention is methyl ester, and thus, in one embodiment, the composition claimed for use as a lamp fuel, comprises one or more methyl esters of C₈-C₁₀ carboxylic acids, such as by weight 30-90% C₈ methyl esters, and/or by weight 30-90% C₁₀ methyl esters. In a preferred embodiment, the composition claimed for use in the present disclosure comprises by weight 10-80% C₈ methyl esters, 10-80% C₁₀ methyl esters, 10-70% C₁₂ methyl esters, and/or 0-40% C₁₄ methyl esters, or the composition for example comprises by weight 35-45% C₈ methyl esters, 25-35% C₁₀ methyl esters, 15-25% C₁₂ methyl esters, and/or 5-15% C₁₄ methyl esters, or for example by weight 15-25% C₈ methyl esters, 10-20% C₁₀ methyl esters, 45-55% C₁₂ methyl esters, and/or 15-25% C₁₄ methyl esters.

In addition to the base formulation of the present disclosure as defined herein, in certain embodiment, a composition of the present invention further comprise at least one additional ingredient. In a preferred embodiment, the composition further comprises at least one alcohol. The alcohol is selected from any alcohol, including alcohols mentioned herein above for use in esterification. In a preferred embodiment, the alcohol comprises 1 to six carbon atoms. Thus, the at least one alcohol is preferably selected from the group consisting of methanol, ethanol, propanol, butanol, pentanol, and hexanol. In another embodiment, the alcohol is selected from the group consisting of methanol, ethanol, propanol, and butanol. The alcohol is preferably butanol.

The alcohol serves in one aspect to conserve the composition; however, addition of alcohol lowers the flash point and may also affect the viscosity of the composition. Thus, the amount of alcohol in the composition should be adjusted to comply with the requirements to the composition of the present disclosure with respect to flash point and/or viscosity.

The composition may comprise any amount of alcohol; the amount of alcohol in the composition depends on the specific composition, and may be determined by the skilled practitioner. In one embodiment, the composition comprises up to 40% alcohol, such as less than 30 %, for example less than 20 %, such as less than 10 %, for example less than 9, 8, 7, 6, 5, 4, 3 %, such as less than 2 %, such as less than 1 %, for example less than 0.5 % by weight alcohol. In one embodiment, the composition comprises between 0.5 and 10 % by weight alcohol, such as between 0.5 and 5 % by weight alcohol, such as between 0.5 and 2 % by weight alcohol as defined above, such as methanol, ethanol, propanol, and/or butanol, preferably butanol.

### Vegetable oil

In one aspect, the present disclosure relates to a method for producing a fuel composition comprising the steps of: a. providing a vegetable oil, b. preparing alkyl esters of carboxylic acids comprised in said vegetable oil by esterification and/or transesterification, and c. optionally isolating one or more of said alkyl esters of said carboxylic acids, wherein said alkyl esters of carboxylic acids comprised in said vegetable oil and/or said one or more isolated alkyl esters constitute said fuel composition.

The vegetable oil of the present disclosure may be provided as a waste vegetable oil or a pure vegetable oil. The use of waste vegetable oil may be economically beneficial when producing large amounts of refined oil. Enormous amounts of waste vegetable oil are produced annually, mainly from industrial deep fryers in potato processing plants, snack food factories and fast food restaurants. This waste product may be recycled for use in production of compositions of the present disclosure. Pure vegetable oil (pure plant oil (PPO) or Straight Vegetable Oil (SVO)), in contrast to waste vegetable oil, is not a by-product of other industries, and thus its prospects for use as fuel are not limited by the capacities of other industries. Important considerations when selecting a suitable vegetable oil for use in the present disclosure includes its suitability as a fuel, based on flash point, energy content, viscosity, combustion products and other factors, as well as the cost, based in part on yield, effort required to grow and harvest, and post-harvest processing cost.

The most common commercially used oil crops are particularly preferred. Thus, in one embodiment, the vegetable oil of the present disclosure , for example the vegetable oil provided in a method of the present disclosure , is selected from the group consisting of coconut, corn, cottonseed, olive, palm, peanut, rape, rapeseed, safflower, sesame, soybean, jatropha and sunflower oils. In a preferred embodiment, the vegetable oil is rape oil, rapeseed oil, soybean oil, jatropha or sunflower oil.

In another embodiment, the vegetable oil is a nut oil, such as oil extracted from almond, cashew, hazelnut, macadamia, mongongo, pecan, pine, pistachio, and walnut. In yet another embodiment, the vegetable oil of the present disclosure is extracted from Castor, Coconut, Corn, Cottonseed, False, Hemp, Mustard, Palm, Peanut, Radish, Rapeseed, Ramtil, Rice, Safflower, Salicornia, Soybean, Sunflower, and/or Tung.

In yet another embodiment, the vegetable oil provided in the method of the present disclosure is in one embodiment selected from the group consisting of coconut, corn, cottonseed, olive, palm, peanut, rape, rapeseed, canola, safflower, sesame, soybean, jatropha and/or sunflower oils; for example, the vegetable oil is selected from the group consisting of sunflower oil, olive oil, rape oil soy bean oil and jatropha oil. In a preferred embodiment, the vegetable oil is a rapeseed oil, and in an even more preferred embodiment, the vegetable oil is palm tree oil or palm kernel oil.

In yet another embodiment, the vegetable oil of the present disclosure extracted from algae, which can be grown using waste materials such as sewage and without displacing land currently used for food production. Oil from halophytes such as salicornia bigelovii, may also be used as a source for a vegetable oil of the present disclosure, and can be grown using saltwater in coastal areas, where conventional crops cannot be grown, with yields equal to the yields of soybeans and other oilseeds grown using freshwater irrigation.

### Refined vegetable oil

The compositions of the present disclosure in one aspect comprise a vegetable oil, which is refined. In the method of the present disclosure for producing a fuel composition, one or more of said alkyl esters of said carboxylic acids are isolated. The term "isolation" as used in the context of the method of the present disclosure for producing a fuel composition, refers to the extraction of one or more alkyl esters from other alkyl esters, for example extracting alkyl esters of C₆-C₁₆ carboxylic acids, such as C₈-C₁₄ carboxylic acids, from higher and/or lower chain length alkyl (methyl or ethyl) esters. Isolation is not meant to indicate that the relevant alkyl esters have been 100% purified or completely isolated from other compounds, molecules or alkyl ester. Isolation of alkyl esters of a specific length (C₆-C₁₆) is meant to describe that the relative concentration of the isolated alkyl esters have been increased, such that the composition for example comprises at least 50%, such as at least 60%, 70%, 80%, or 90% of an alkyl ester of a C₆-C₁₆ carboxylic acid.

The isolation according to the method of the disclosure of the one or more alkyl esters of a carboxylic acid is for example obtained by fractionation and/or distillation. Any other method available to those of skill in the art may also be used for fractionating or isolating the alkyl esters prepared according to the method of the present disclosure.

In the method of the disclosure , the vegetable oil and/or the prepared alkyl esters may be further refined. Several methods for refining a fuel composition or alkyl ester composition are available, including desliming/delicithination, fractionation, distillation, charcoal adsorption and/or bleaching. In one embodiment, the vegetable oil and/or alkyl esters are refined by of extensive bleaching of the fuel composition, for example the extensive bleaching comprising the steps of a) heating the vegetable oil to 220-300 degrees Celsius, b) adding 1 -10 % bleaching clay, c) stirring optionally under vacuum in at least 15 minutes, and d) separation of the bleaching clay and refined vegetable oil by filtration.

The vegetable oil is for example refined and used as a biological non-petrol-based fuel, suitable for example for use as a lamp fuel. Refined vegetable oil may be used for production of biodiesel. The term biodiesel as used herein refers to a non-petroleum-based diesel fuel consisting of long chain alkyl (e.g. ethyl, methyl, or propyl) esters, made by transesterification of vegetable oil, which can be used for a wide range of applications.

Thus, the vegetable oil of the present disclosure is in one embodiment a refined vegetable oil, wherein certain components are removed or isolated from the crude oil. The oil may be refined by any method conventionally used. For example, a refined vegetable oil of the present disclosure is refined by one or more methods selected from the group consisting of desliming/delicithination, bleaching, and/or isolation of carboxylic acids by fractionation or distillation. In particular, specific carboxylic acids and/or alkyl ester, preferably methyl esters, of specific carboxylic acids may be isolated by fractionation and/or distillation.

Moreover, the composition of the present disclosure is in one embodiment a fuel composition based on refined vegetable oil and a fuel supporter. A refinement of vegetable oil may comprise hydrolyzing triacylglycerol and separating a carboxylic acid fraction from a glycerol fraction, distillation or fractionation for isolation of specific carboxylic acids or alkyl esters, bleaching or extensive bleaching of the oil, deliming/delicithination, as well as other methods conventionally applied for refinement of oils including vegetable oils. The vegetable oil is preferably bleached, and more preferably extensively bleached/double bleached, cf. below and example 6.

In one embodiment, the vegetable oil is distilled, and/or the fatty acids/carboxylic acid of the vegetable oil are isolated by distillation, such that fuel composition can be prepared which primarily contains fatty acids/carboxylic acids and derivatives thereof, such as specific carboxylic acids or alkyl ester thereof, such as methyl esters, ethyl esters, propyl esters or butyl esters of specific carboxylic acid, wherein the carbon chain of the fatty acid consists of for example 4 (C4), 5 (C5), 6 (C6), 7 (C7), 8 (C8), 9 (C9), 10 (C10) carbon atoms.

The vegetable oil has optionally been delecithined (deslimed/degummed), i.e. the lecithin has been removed from the crude oil. This may be accomplished by bleaching or degumming with clay. The vegetable oil for use in a fuel composition of the present disclosure, degumming may be performed at a considerably higher temperature than normal, thereby removing a larger proportion of colorants from the oil. A lamp oil or fuel composition of the present disclosure prepared from a vegetable oil, which has been degummed at increased temperature, has a lower viscosity and reduced amounts of slag on the wick when burning.

Thus, in one embodiment, the disclosure relates to a composition, which comprises a refined vegetable oil. Vegetable oils of the present invention include all vegetable oils that are extractable from plants. Vegetable oils may be removed from the plant by any conventional method known to those of skill within the art. In one method, the oil may be extracted from the plant by placing the relevant part of the plant under pressure, thereby producing an expressed oil. Oils may also be extracted from plants by dissolving parts of plants in water or another solvent. The solution may be separated from the plant material and concentrated, thus providing an extracted or leached oil. Moreover, the mixture may be separated by distilling the oil away from the plant material. Oils extracted by this latter method are called essential oils. Essential oils often have different properties and uses than pressed or leached vegetable oils. Macerated oils are made by infusing parts of plants in a base oil. The vegetable oil of the present disclosure may be extracted from any plant.

In one embodiment, the composition of the present disclosure further comprises a refined vegetable oil and/or a refined transesterified or esterified vegetable oil. For example, the vegetable oil and/or refined transesterified or esterified vegetable oil has been refined by isolation of carboxylic acids, desliming/delicithination, fractionation, distlliation, and/or bleaching.
Biodiesel and/or alkyl esters of the present disclosure are commonly produced by the esterification/transesterification of the vegetable oil. There are several methods for carrying out this esterification/transesterification reaction including the common batch process, supercritical processes, ultrasonic methods, and even microwave methods. Biodiesel is a fatty acid/carboxylic acid alkyl ester, where the ester is not a glycerol ester, but rather, an ester formed with a monohydroxy alcohol. Examples of alcohols used to prepare biodiesel/alkyl ester fuel composition of the present invention are described elsewhere herein, and include methanol, ethanol, and mixtures thereof, although virtually any C₁₋₁₀ alcohol can be used. The biodiesel and alkyl esters of the present disclosure are typically formed by transesterification of a triglyceride with an alcohol, although it can also be formed by esterification of a free fatty acid.

### Alcohol

Compositions of the present disclosure comprise in one embodiment at least one additional component, such as an alcohol and/or fuel supporter. The function of an alcohol or fuel supporter in the composition is to ensure the production of a stable flame when the composition is used for example as a lamp fuel composition and to ensure a low viscosity to ensure transportation in the wick. Moreover, the alcohol or fuel supporter may serve for conservation of the composition or lamp fuel. An alcohol or fuel of the present disclosure includes any suitable substance and include, for example, alcohol such as methanol, ethanol, propyl alcohol, isopropyl alcohol, butyl alcohol, isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; glycols such as propylene glycol, ethylene glycol, dipropylene glycol, glycerol, diethylene glycol, triethylene glycol, trimethylene glycol, hexylene glycol, butylene glycol, 1,3-butanediol, thiodiethylene glycol, ammonium thioglycolate, cefatrizine glycol, polypropylene glycol, propylene glycol alginate; dichloromethane; butyl acetate; acetone; acetonitrile; ethyl acetate; and the like as well as mixtures thereof. In a preferred embodiment, the fuel supporter or alcohol is ethanol, methanol, butanol, or mixtures thereof, however preferably butanol.

In another embodiment, the compositions claimed for use according to the present disclosure further comprises an alcohol, for example between 0.5 and 10 %, for example between 1 and 5% by weight alcohol. The alcohol is for example selected independently from the group consisting of alcohols such as dichloromethane, butyl acetate, acetone, acetonitrile, ethyl acetate, methanol, ethanol, propyl alcohol, isopropyl alcohol, butyl alcohol (butanol), isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; and glycols such as propylene glycol, ethylene glycol, dipropylene glycol, glycerol, diethylene glycol, tri-ethylene glycol, trimethylene glycol, hexylene glycol, butylenes glycol, 1,3-butanediol, thiodiethylene glycol, ammonium thioglycolate, cefatrizine glycol, polypropylene glycol, propylene glycol alginate; dichloromethane, butyl acetate, acetone, acetonitrile, and ethyl acetate. Preferably, the alcohol comprises one to six carbon atoms, and is for example selected from the group consisting of methanol, ethanol, propanol, butanol, pentanol, hexanol, and mixtures thereof, such as methanol, ethanol, propanol and/or butanol, for example the alcohol is ethanol, methanol and/or butanol.

### Melting point

The melting point is the temperature at which the solid and liquid phase exists in equilibrium. The melting point is a more precise measure of this equilibrium than the solidification point, as some substances are able to supercool. Therefore, the solidification point is a very poor and unclear measure of the precise temperature, at which the solid and liquid phase exists in equilibrium. Consequently, the melting point is used as a structural feature of specific embodiment of the compositions of the present disclosure. Thus, the compositions used according to the present invention have a melting point below 0°C.

In particular, the composition is in a liquid state in any normal temperature range for the use of a fuel composition, in particular a lamp oil or lighter fluid composition. Thus, the composition is preferably in a liquid state in the temperature range from -30 to 300°C, or for example from -15 to 200°C, or -10 to 100°C. In particular, the compositions claimed for use as a fuel, such as a lamp fuel, has a melting point of less than O°C; the melting point composition is for example below -5°C, such as below -10°C, for example between -15°C.

The melting point and range of liquid state is inter alia determined by the length of the alkyl ester chain, and the alkyl esters, such as alkyl esters of C₆-C₁₆ carboxylic acids, wherein the alkyl esters are predominantly saturated are characterized by a melting temperature and liquid state temperature, which are optimal for the use of the compositions according to the present disclosure. For example, the aliphatic chains of the alkyl esters of the present disclosure are preferably saturated, and for example, at least 50%, such as 60%, at least 70%, such as 80%, at least 90%, such as 95% of the alkyl esters are fully saturated. The extent of saturation and chain length of the alkyl, such as methyl or ethyl, esters affects the melting point, viscosity, soot emission, flash point and other important features of a fuel composition, such as a lamp fuel.

### Soot emission

An important feature of a fuel composition is the soot emission. It is of course desirable that the soot emission of a lamp oil is kept to a minimum. Therefore, the soot index of a composition of the present disclosure is preferably below 100 Si/h, for example below 50 Si/h, such as below 40 Si/h, for example below 30 Si/h, such as below 20 Si/h, for example below 10 Si/h, such as below 5 Si/h, for example below 4 Si/h, such as below 3 Si/h, for example below 2 Si/h, such as below 1 Si/h, for example below 0.5 Si/h. The soot index of a composition claimed for use as a lamp oil according to the present disclosure is preferably in the range from 0.01 to 0.90 Si/h.

### Viscosity

The viscosity is an important factor for the use of a composition as a lamp fuel; i.e. the use of a lamp fuel composition/lamp oil, since the viscosity of the composition determines the distance that the composition can travel in a wick from the surface of the fuel composition to the top of the wick, where the combustion occurs. Thus, there is a direct correlation between the lamp fuel viscosity and capillary effect, and between lamp fuel viscosity and wick composition (such as wick diameter, structure and composition, e.g. cotton or synthetic fibre). A small wick diameter allows a lamp fuel with a relatively low viscosity to travel through the wick, whereas more viscous composition travel relatively poor in a small diameter wick.

In general, viscosity is a measure of the resistance of a fluid which is being deformed by either shear stress or extensional stress. In everyday terms (and for fluids only), viscosity is "thickness". Thus, water is "thin", having a lower viscosity, while honey is "thick" having a higher viscosity. Viscosity describes a fluid's internal resistance to flow and may be thought of as a measure of fluid friction. Viscosity can be indicated by a viscosity coefficient. For example, Dynamic viscosity (or absolute viscosity) determines the dynamics of an incompressible Newtonian fluid, and the Kinematic viscosity coefficient is the dynamic viscosity divided by the density for a Newtonian fluid. The cgs (centimetre-gram-second system) physical unit for dynamic viscosity is the poise (P), named after Jean Louis Marie Poiseuille. It is more commonly expressed, particularly in ASTM standards, as centipoise (cP). 1 P = 1 g·cm⁻¹·s⁻¹. Water at 20 °C has a viscosity of 1.0020 cP. The higher (and the cP value), the higher is the viscosity.

The cgs physical unit for kinematic viscosity is stokes (St), named after George Gabriel Stokes. It is sometimes expressed in terms of centistokes (cSt or ctsk).
1 cSt = 1 mm²·s⁻¹ = 10⁻⁶m²·s⁻¹. Water at 20 °C has a kinematic viscosity of about 1 cSt

Thus, an important characteristic of the fuel composition of the present invention is the viscosity. The viscosity of the composition allows for transport of the composition in a wick by capillary transport. A highly viscous fuel composition will not transfer by capillary force in a normal oil lamp wick, and thus fuel composition with a viscosity which is higher than about 10 cP, such as 15 cP, such as higher than about 20 cP are not suitable as lamp fuel/lamp oil. Typically, the viscosity increases with the size of the fatty acid derived alcohol in a composition, and thus, compositions comprising substantial amounts of alcohols, or methyl esters, ethyl esters, propyl esters or butyl esters of fatty acids, wherein the fatty acid comprise more than 12, or 14, and in particular 16 or more carbons is too high to allow efficient transport of the lamp fuel in a normal oil lamp wick.

Thus, the lamp fuel or fuel composition of the present disclosure preferably does not comprise substantial amounts of alcohols, or methyl esters, ethyl esters, propyl esters or butyl esters of fatty acids, wherein the fatty acid comprise more than 12 or 14 carbons. In particular, the composition for use as a lamp fuel preferably does not comprise substantial amounts of methyl esters, ethyl esters, propyl esters or butyl esters of C₁₆ or longer chain carboxylic acids.

Specifically, the composition for use as a lamp fuel, the lamp fuel or fuel composition of the present disclosure is not:
a lamp oil composition, comprising: a base formulation including by weight %: 40-60 methyl palmitate; 25-45 methyl stearate; and 10-20 myristyl alcohol; said composition further comprising an alcohol with less than six carbons, wherein the weight percentage of the composition of the alcohol with less than six carbons is between 5 and 15 and that of the base formulation is between 85 and 95.

The viscosity of a liquid depends on the temperature of the liquid. The relevant measure of viscosity of a composition of the present disclosure is the viscosity at the temperature, at which the composition would normally be used as a lamp oil.

Therefore, the viscosity for a lamp oil should be optimal to allow sufficient transport in a wick at temperatures ranging from -20°C to about 30°C. The composition of the present disclosure for use as a fuel, such as a lamp fuel has in certain embodiments a viscosity at 20°C, which is less than 10 cPoise (cP), such as less than 5 cP, such as less than 4 cP, for example less than 3 cP, such as less than 2.5 cP, for example less than 2 cP, such as less than 1.5 cP, for example less than 1 cP, preferably between 5 and 0 cP, for example between 4 and 1 cP, such as between 3 and 1.5 cP, such as between 2.5 and 1.5 cP.

Preferably, the viscosity of the lamp fuel of the present invention as measured at 5.3 hPa and 22 degrees Celsius is between 2.5 and 1 cP.

The kinematic viscosity of the composition of the present disclosure for use as a lamp fuel, may also be used to define the composition. Thus, in one embodiment, the kinematic viscosity of the lamp fuel of the present disclosure as measured at 5.3 hPa and 22° C is below 15 cSt, such as below 10 cSt, for example below 5 cSt. More preferred, the viscosity is between 1-4 cSt, such as approximately 2, or 2.5 cSt. In one embodiment, the viscosity of the composition is less than 10 cSt, such as less than 5 cSt, such as less than 4 cSt, for example less than 3 cSt, such as less than 2.5 cSt, for example less than 2 cSt, such as less than 1.5 cSt, for example less than 1 cSt. In another embodiment, the composition has a viscosity, which is between 5 and 0 cSt, for example between 4 and 1 cSt, such as between 3 and 1.5 cSt, such as between 2.5 and 1.5 cSt. In a preferred embodiment, the kinematic viscosity of the composition is below 2 cSt.

The relevant viscosity of the composition for use as a fuel, such as a lamp fuel according to the present disclosure is the viscosity measured at the temperature at which the composition is intended for use as a lamp oil, which is for example broadly in the temperature range from about -10°C to about 40°C, but most commonly between 15 to 25°C. The viscosity always decreases with increasing temperature, and thus, the viscosity of a liquid composition at 40°C is significantly lower than the viscosity of the same liquid composition at 20°C. For example, a liquid which has a viscosity of 2 cSt at 40°C has a significantly higher viscosity when measure at 20°C. The composition of the present disclosure for use as a lamp oil has a preferred viscosity of about 2 cSt at 20 °C. However, viscosity is sometimes as a standard measured at 40°C. Since viscosity depends on the temperature of the liquid, the viscosity of a composition for use as a fuel such as a lamp fuel or lamp oil according to the present disclosure measured at 40°C is lower than the viscosity indicated above at 20°C or 22°C. In particular, any lamp oil, which has a viscosity of 2 cSt or more at 40°C are not suitable as a lamp oil, and such composition are not claimed for use as a lamp oil. A composition comprising a base formulation of one or more alkyl esters of a C₆-C₁₆ carboxylic acid or mixtures thereof for use as a lamp oil according to the present disclosure, has a viscosity at 40°C below 7 cSt, such as below 6 cSt, such as below 5 cSt, such as below 4 cSt, such as below 3 cSt, such as below 2 cSt, such as below 1.8 cSt, for example below 1.6 cSt, such as below 1.4 cSt, for example below 1.2 cSt, such as below 1.0 cSt, for example below 0.8 cSt, such as below 0.6 cSt, for example below 0.4 cSt, such as below 0.2 cSt. The viscosity at 40°C is for example between 0 and 7 cSt, such as between 0 cSt and 5 cSt, for example between 0 cSt and 3 cSt, such as between 0 cSt and 1 cSt or between 1 cSt and 2 cSt or between 2 and 3 cSt.
In another embodiment, the composition has a viscosity at 40°C below 7 cP, such as below 6 cP, such as below 5 cP, such as below 4 cP, such as below 3 cP, such as below 2 cP, such as below 1.8 cP, for example below 1.6 cP, such as below 1.4 cP, for example below 1.2 cP, such as below 1.0 cP, for example below 0.8 cP, such as below 0.6 cP, for example below 0.4 cP, such as below 0.2 cP. The viscosity at 40°C is for example between 0 and 7 cP, such as between 0 cP and 5 cP, for example between 0 cP and 3 cP, such as between 0 cP and 1 cP or between 1 cP and 2 cP or between 2 and 3 cP.

In particular, the present disclosure does not relate to the use of fatty acid derivatives with a solidification point below 0°C, an iodine value below 20 and a surface tension of more than 25 mN/m as lamp oils, characterized in that the lamp oil has a viscosity of more than 2 cSt at 40°C,

Thus, the composition preferably has a viscosity that resembles water, and is liquid at temperatures above -5 degrees Celsius. However, the viscosity and physical state of the composition may vary depending on the specific components of the composition, for example on the choice of vegetable oil/carboxylic acid, and the relative concentration of fuel supporter and glycerol in the composition.

Importantly, viscosity is correlated with surface tension. The higher the surface tension, the higher the viscosity. Since the viscosity of the compositions for use as a fuel, such as a lamp fuel or a lamp oil, according to the present disclosure is an important feature, the surface tension of the composition is also an important feature of the composition, in that it reflects the viscosity of the liquid composition.

As for viscosity, the relevant surface tension of the composition for use as a fuel, such as a lamp fuel according to the present disclosure is the surface tension measured at the temperature at which the composition is intended for use as a lamp oil, which is for example broadly in the temperature range from about -10°C to about 40°C, but most commonly between 15 to 25°C. Surface tension always decreases with increasing temperature, and thus, the surface tension of a liquid composition at 40°C is significantly lower than the surface tension of the same liquid composition at 20°C. For example, a liquid which has a surface tension of 25 mN/m at 40°C has a significantly higher surface tension when measured at 20°C. The composition of the present disclosure for use as a lamp oil has a preferred surface tension at 20°C below 100 mN/m, below 90 mN/m, below 90 mN/m, below 80 mN/m, below 70 mN/m, below 60 mN/m, below 50 mN/m, such as below 40 mN/m, such as below 30 mN/m, such as below 20 mN/m, such as below 10 mN/m. However, viscosity is sometimes as a standard measured at 40°C. Since surface tension depends on the temperature of the liquid, the surface tension of a composition for use as a fuel such as a lamp fuel or lamp oil according to the present disclosure measured at 40°C is significantly lower than the surface tension indicated at 20°C or 22°C. Thus, the surface tension of the composition claimed for use as a lamp oil measured at 40°C is, in a preferred embodiment, below 25 mN/m. In fact, any composition of the present disclosure, wherein the surface tension is above 25 mN/m is not suitable as a lamp oil and such compositions are therefore disclaimed for use as a lamp oil according to the present disclosure. In particular, the present disclosure in one embodiment does not relate to the use of fatty acid derivatives with a surface tension of more than 25 mN/m as lamp oils, and more specifically, the present disclosure does not relate to the use of fatty acid derivatives with a solidification point below 0°C, an iodine value below 20 and a surface tension of more than 25 mN/m as lamp oils. Thus, the present disclosure relates in one embodiment relates to the use of a composition comprising a base formulation of one or more alkyl esters of a C₆-C₁₆ carboxylic acid or mixtures thereof as a lamp fuel, provided that the composition is not fatty acid derivatives with a solidification point below 0°C, an iodine value below 20 and a surface tension of more than 25 mN/m, or does not comprise fatty acid derivatives with a solidification point below 0°C, an iodine value below 20 and a surface tension at 40°C of more than 25 mN/m.

### Flash point

The flash point of a flammable liquid is the lowest temperature at which it can form an ignitable mixture in air. The flash point of liquids and compositions are important for safety during transport and storage of fuels and compositions. Thus, the higher the flash point, the safer it is to store and transport the liquid/composition. The flash point of the compositions of the present disclosure is thus preferably above 50 degrees Celsius, such as preferably above 60 degrees Celsius. In a preferred embodiment, the flash point of the composition is between 60 and 100 degrees Celsius, such as between 60-70, 70-80, or 80-90, or 90-100 degrees Celsius. The components of the compositions and formulations of the present disclosure are, thus, mixed in appropriate ratios in order to obtain a suitable flash point.

### Additional components

The compositions of the present disclosure may comprise a range of additional components, the choice of which depends on the particular use of the composition. For example, the compositions can optionally include one or more additives, such as lubricants, emulsifiers, wetting agents, densifiers, fluid-loss additives, corrosion inhibitors, oxidation inhibitors, friction modifiers, demulsifers, anti-wear agents, antifoaming agents, detergents, rust inhibitors and the like. Furthermore, other hydrocarbons can be blended with the composition, provided that the final blend has the appropriate physical properties, such as freeze points, kinematic viscosity, flash point, and toxicity properties as described elsewhere herein.

For example, the composition may further comprise dyes for coloring the composition. The composition may also comprise special dyes that will cause the flame to burn a different color, when the composition is used as a lamp fuel. Moreover, the composition may comprise any suitable scent or fragrance.

The fuel composition can be colored so it adds a decorative touch to lanterns or lamps with transparent reservoirs. The fuel can also be aromatic so that when it burns, it spreads a soothing fragrance through the air, much like an air freshener, such as rose or lavender, lemongrass or vanilla. Alternatively, the lamp oil, when burned in outdoor torches, may comprise an additional component, such as a fragrance, which keeps away mosquitoes and other bothersome insects.

According to a particular embodiment of the present disclosure, the compositions of the present disclosure further comprise lauryl alcohol. The presence of lauryl alcohol facilitates capillary uptake by the wick, when the fuel composition is used as a lamp fuel.

### Antioxidant

In one embodiment, the compositions of the present disclosure further comprise at least one antioxidant. An antioxidant is a molecule capable of slowing or preventing the oxidation of other molecules. In the present disclosure, the presence of an antioxidant prevents the oxidation of the vegetable oil in the composition, and thereby increases the storage and shelf life of the composition. Oxidation is a chemical reaction that transfers electrons from a substance to an oxidizing agent. Antioxidants terminate oxidation reactions by removing free radical intermediates, and inhibit other oxidation reactions by being oxidized themselves. As a result, antioxidants are often reducing agents. Thus, the at least one antioxidant of the present disclosure is a reducing agent, such as a thiol or a polyphenol. In one embodiment, the antioxidant is selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidases. In another embodiment, the antioxidant is selected from the group consisting of , Ellagic acid, Gallic acid, Salicylic acid, Rosmarinic acid, Cinnamic acid, Chlorogenic acid, Chicoric acid, Gallotannins, Ellagitannins, Curcumin, Xanthones, Flavonolignans, Eugenol, Citric acid, oxalic acid, phytic acid, Lignan, Bilirubin,, Uric acid, R-α-Lipoic acid, and/or N-Acetylcysteine.

In one embodiment, the composition further comprises an antioxidant, such as an antioxidant selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidises, and/or the composition may also comprise a coloring agent, such as a coloring agent is selected from the group consisting of a lithium salt or strontiumsalt, boric acid, borax sodiumsalt, barium salt, calcium salt, copper salt, potassium salt, cerium salt, cesium salt, and nitromethane, and/or the composition may comprise a fragrance, which is suitable for use in a fuel composition, such as a lamp oil, in particular a lamp oil for indoor use.

### Uses of the composition

The compositions described herein are suitable for a wide range of applications The compositions are claimed for use as lamp fuel.

In another embodiment, the composition claimed for use according to the present d comprises one or more methyl esters of C₈-C₁₀ carboxylic acids Preferably at least 80% of the alkyl esters are fully saturated.
The compositions claimed for use as a fuel, such as a lamp fuel composition has a melting point of less than 0 °C; and the composition is preferably liquid at least in the temperature range from 0-100 °C, such as 0-80 °C, for example 0-60 °C. The composition has in certain embodiments a viscosity, which is between 2.5 and 1.5 cP. In a specific embodiment, the present disclosure relates to the use of a composition comprising by weight 35-45% C8 alkyl esters, 25-35% C10 alkyl esters, 15-25% C12 alkyl esters, and/or 5-15% C14 alkyl esters as an indoor lamp fuel. In another specific embodiment, a composition comprising by weight 15-25% C8 alkyl esters, 10-20% C10 alkyl esters, 45-55% C₁₂ alkyl esters, and/or 15-25% C₁₄ alkyl esters is claimed for use as an outdoor lamp fuel.

The composition is burnable and may thus replace any burnable compositions, for example petrol-based compositions. Obvious applications of the fuel compositions of the present disclosure include without limitation its use for lighting, heating, cooling and/or cooking. Thus, the disclosure relates to use of any composition of the present disclosure for lighting, heating, cooling and/or cooking, cf. below. Thus, in one embodiment, the present disclosure relates to use of any composition of the present invention for the preparation of a lamp fuel, heating fuel, fuel for cooking and/or cooling fuel.

For example, the fuel composition may be used as a lamp fuel for lighting in decorative lamps, torches, primus lamps, pressure lamps etc. The fuel composition may also be used as a heating fuel for heating for example domestic heating as a fuel in a primus, an oven etc., which generally use oil as a fuel. Moreover, the composition may be used as a fuel for cooking, for example in a primus, stove, oven, or other devices that may be fuelled by an oil. Additionally, the composition is in one embodiment used for cooling, for example used in refrigerators, freezers, air conditioners and/or other apparatuses which may be fuelled by an oil composition.

The composition of the present disclosure, such as a composition comprising a base formulation of one or more alkyl esters of a C₆-C₁₆ carboxylic acid or mixtures thereof as a fuel composition, are disclosed for use as a fuel. Thus, the composition is used as a fuel composition. The term "fuel" as used herein broadly refers to any composition which comprises energy, which may be released for example by burning. The energy may be used to heat or cool and object, to move an object, and/or for lighting or cooking.

Thus, the compositions may be used for lighting, for example as fuel in lamps, torches, barn lamps, lanterns, mantle lamps, pressure lamps etc. Thus, in a preferred embodiment, the composition of the present disclosure is a lamp fuel composition, i.e. the composition is suitable for use as lamp fuel. Consequently, the present disclosure relates to a lamp fuel composition comprising any composition according to the present disclosure. Moreover, use of a composition of the present disclosure is disclosed for the preparation of a lamp fuel. Similarly, the disclosure relates to use of any composition of the present disclosure as a lamp fuel.
In particular, the present disclosure relates to a composition as defined herein for use as a lamp fuel, lighter fluid, and/or heating fuel.

The compositions of the present disclosure are disclosed for use as a lamp fuel, which is suitable for use in any lamp, which normally uses conventional petrol-based lamp fuel. For example a kerosene lamp (also known as a paraffin lamp), which include any type of lighting device that uses kerosene (paraffin) as a fuel. There are two main types of kerosene lamp which work in different ways, the "wick lamp" and the "pressure lamp". A wick lamp is a simple type of kerosene lamp which works in a similar way to a candle. This type of lamp is also known as an "oil lamp". In a wick lamp there is a small fuel tank at the bottom of the lamp, wherein the vegetable lamp fuel composition if the present disclosure is applied. There is also a wick, usually made of cotton. The lower half of the wick is dipped into the lamp fuel and absorbs the fuel. The top part of the wick extends out of the top of fuel tank and (usually) a wick adjustment mechanism. There are many variations in wick lamp design, the barn (tubular) and Aladdin being the most common. When the top part of wick is lit, the lamp fuel, which has been absorbed in the wick burns and produces a flame. As the lamp fuel burns, capillary action inside the wick draws more lamp fuel up from the fuel tank to be burned.
Barn lamps (or lanterns) have several design variations. The earliest lanterns used the dead flame design where the flame was fed fresh air from beneath and warm air expelled above. Because this design does not feed air directly, this type of lamp produces only a dim yellow light and is not much brighter than a candle. Most Aladdin style lamps are dead flame. Tubular lamps recirculate a mix of fresh and warm air back to the flame through side tubes thus improving the lamp fuel burning efficiency. Kerosene lamps are especially used for decorative purposes, emergency lighting, or in remote areas without electricity. However, in many countries today lamp oil lighting and stoves fuelled by a suitable fuel are still in regular use and the fuel composition of the present disclosure are therefore highly suitable for these applications.
A pressure lamp or a blow lamp (a "Tilley lamp") may also be fuel by a lamp fuel composition of the present disclosure. A pressure lamp is more sophisticated than a wick lamp and produces a much brighter light, although they can be quite complicated and fiddly to use. A pressure lamp has a fuel tank at the bottom with a small pump to pressurize the fuel. There is a narrow gap up to the top of the lamp called a flue, and at the top of the lamp there is a burner (gas outlet). Directly underneath the burner is the mantle, a fabric bag coated with chemicals which incandesce (glow brightly) when heated by the gas flame. To work a pressure lamp the lamp fuel needs to be heated to the point where it is vaporized. This is necessary because vaporized fuel burns much hotter than liquid fuel. The fuel burner has to be heated by means of a primer, usually methylated spirit, which is burnt in a small tray underneath the burner to heat it. The lamp oil in the tank is then forced into the burner, which is done by pumping up the air pressure in the fuel tank. This causes the kerosene to be forced upwards through the flue. After the primer has stopped burning, the flames from the primer should have got the burner hot enough to vaporize the lamp oil. When a valve is opened, the pressurized lamp fuel is forced into the hot burner where it is vaporized. This fuel vapour is then directed downwards into the mantle where it burns hot enough to make the mantle glow and produce a bright white light. The heat from the burning vapour, in turn vaporises the liquid lamp fuel, which is being forced into the burner.

There are also portable stoves which work in much the same way as pressure lamps, and these stoves may also use a fuel composition of the present disclosure.

The compositions of the present disclosure are also claimed for use for kindling, such as kindling of fire, firewood in fireplaces, stoves, grills, broilers and the like. Moreover, the compositions may be used for stoking. Therefore, the compositions of the present disclosure are provided for use as a lighter fluid.

In another application, the compositions of the present disclosure may be used for heating, for example home heating or heating in auto campers etc. The compositions may be used as fuel in different heating devices, such as heaters.
Moreover, the compositions may be used as fuel in any other specialized engine of device, wherein the use of non-toxic, non-petroleum based fuel is desirable.

The biological non-petrol based fuel of the present disclosure may be used alone, or blended with conventional petrodiesel in unmodified diesel-engine vehicles.

### Lamp fuel for indoor use

In a preferred embodiment, the lamp fuel of the present invention is employed for indoor use for oil lamps, or indoor torches etc. Indoor lamps and torches are typically characterized by smaller wicks, with diameters in the area of 1-5 mm. The wick diameter affects the temperature at which the fuel is burning, such that the larger the wick diameter, the higher the temperature. A smaller wick as is typically employed in indoor oil lamps sustain a relatively lower flame temperature, and thus, the lamp fuel used in indoor lamps or lamps with smaller wicks (e.g. typically below 5 mm) should preferably comprise distilled and/or fractionated vegetable oil/carboxylic acid esters. Moreover, smaller wick sizes primarily supports capillary transport of liquid compositions with a relatively low viscosity. Thus, specifically, the lamp fuel for indoor use is low viscous vegetable based lamp fuel/lamp oil, wherein the viscosity at 20°C is below 6 cP, preferably between 2-5 cP, such as between 2-3 cP.

In one embodiment, the present invention relates to a composition comprising a base formulation of one or more alkyl esters of a C₆-C₁₆ carboxylic acid or mixtures thereof for use as a lamp fuel, such as an indoor lamp fuel. The composition is defined elsewhere herein, but for example comprises one or more alkyl esters of C₈-C₁₀ carboxylic acids, such as by weight 30-90%C₈ methyl esters, and/or by weight 30-90% C₁₀ methyl esters.

In a specific embodiment, the present invention relates to the use of a composition comprising by weight 35-45% C₈ methyl esters, 25-35% C₁₀ methyl esters, 15-25% C₁₂ alkyl esters, and/or 5-15% C₁₄ alkyl esters as an indoor lamp fuel, wherein the alkyl ester preferably is methyl ester and/or ethyl ester.

The lamp fuel composition may also comprise smaller amounts of capric acid (decanoic acid) (C10) and Lauric acid (dodecanoic acid) (C12). These acids may be laborious or expensive to remove by distillation, and thus, smaller amounts of these fatty acid derivatives are accepted in the compositions of the present invention.

In another embodiment, the fuel composition comprises linoleic acid (C18: 2) and Linolenic acid (C18: 3).

In addition to the fatty acid derivative, the lamp fuel composition further comprises an alcohol as a fuel supporter. The alcohol may be any alcohol, but is preferably methanol, ethanol, and/or most preferably butanol.

The mixing between the fatty acid alcohols and alcohol is optimized to achieve the best viscosity, while maintaining an acceptably low flash point and smoke formation.

### Lamp fuel for use in dispensers

In a preferred embodiment, the lamp fuel of the present invention is employed for use in indoor oil dispensers.
Specifically, the lamp fuel composition for use in dispensers is low viscous vegetable based lamp fuel/lamp oil, wherein the viscosity at 20°C or 22°C is below 6 cP, preferably between 2-5 cP, such as between 2-3 cP.

The lamp fuel composition may also comprise smaller amounts of capric acid (decanoic acid) (C10) and Lauric acid (dodecanoic acid) (C12). These acids may be laborious or expensive to remove by distillation, and thus, smaller amounts of these fatty acid derivatives are accepted in the compositions of the present invention.

In another embodiment, the fuel composition comprises linoleic acid (C18: 2) and Linolenic acid (C18: 3).

In addition to the fatty acid derivative, the lamp fuel composition further comprises an alcohol as a fuel supporter. The alcohol may be any alcohol, but is preferably methanol, ethanol, and/or most preferably butanol.

The mixing between the fatty acid alcohols and alcohol is optimized to achieve the best viscosity, while maintaining an acceptably low flash point, and as low smoke formation as possible.

### Lamp fuel for outdoor use

In another preferred embodiment, the compositions of the present invention is a lamp fuel for outdoor use, for example for use in outdoor torches. Indoor lamps and torches are typically characterized by smaller wicks, with diameters in the area of 5-15 mm or more. The wick diameter affects the temperature at which the fuel is burning, such that the larger the wick diameter, the higher the temperature. A relatively large wick as is typically employed in outdoor oil lamps/torches sustain a relatively higher flame temperature, and thus, the lamp fuel used in outdoor oil lamps/torches with larger wicks (e.g. typically above 5 mm) may comprise more impurities, which burn at the elevated temperature. Thus, a composition of the present disclosure for use in outdoor oil lamps and torches (employing 5 mm wicks or more) may comprise an alkyl ester derived from undistilled or unfractionated vegetable oil, for example a refined vegetable oil, which has been deslimed and/or bleached or extensively bleached/double bleached before or after esterification/transesterification. That alkyl ester is preferably added to a base formulation as defined herein, comprising one or more alkyl esters of specific carboxylic acids or mixtures thereof.

Moreover, larger wick sizes supports capillary transport of liquid compositions with a relatively higher viscosity; i.e. slightly more "gel-like" compositions. Therefore, a fuel composition for use in lamps with larger wick sizes, primarily above 5 mm, may comprise a relatively larger proportion of alkyl esters of higher number carboxylic acids, which have a relatively larger viscosity. Thus, specifically, the lamp fuel composition for outdoor use or for use in lamps with wick sizes above 5 mm is low viscous vegetable based lamp fuel/lamp oil or a composition of the present disclosure, wherein the viscosity is above 2 cP, for example above 3, 4, 5, or 6 cP, but still preferably between 2-5 cP, such as between 2-3 cP.

In a specific embodiment, a composition comprising by weight 15-25% C₈ methyl esters, 10-20% C₁₀ methyl esters, 45-55% C₁₂ alkyl esters, and/or 15-25% C₁₄ alkyl esters is claimed for use as an outdoor lamp fuel.

Specifically, the composition further comprise in one embodiment a final concentration of 0.1-10 % by weight of an alcohol, such as 0.1-5% by weight, for example 1-3 %, such as 1.5-2.5 % by weight of an alcohol, wherein said alcohol comprises or consists of 1 to 6 carbon atoms, as defined elsewhere herein, and is preferably butanol.
The fuel composition may also comprise alcohols of pure vegetable oils.

The lamp fuel composition may also comprise smaller amounts of capric acid (decanoic acid) (C10) and Lauric acid (dodecanoic acid) (C12). These acids may be laborious or expensive to remove by distillation, and thus, smaller amounts of these fatty acid derivatives are accepted in the compositions of the present invention.

In another embodiment, the fuel composition comprises linoleic acid (C18: 2) and Linolenic acid (C18: 3).

The mixing between the fatty acid alcohols and alcohol is optimized to achieve the preferred viscosity, flash point, wind resistance etc.

The mixing between the fatty acid alcohols, and alcohol reconciled in economic optimization. How requirement to achieve the necessary viscosity, flash point as the limiting factor I. Factor II oil smoke production. Factor III oil "wind resistance

### Examples

### Example 1; for reference only

The following example illustrates specific composition and methods of producing those according to the present invention.

**Table 3**

| Ingredients | Amount |
|---|---|
| Vegetable oil | 1 litre |
| Ethanol or methanol | 70-200 ml |
| Potassium hydroxide (KOH) or sodium hydroxide (NaOH) | 1-5 gram |
| Butanol | 2-15% (w/w) |
| Antioxidant | ∼ |

The composition was prepared as follows:
First, Ethanol or methanol and Potassium hydroxide (KOH) or sodium hydroxide (NaOH) is mixed, and that mixture is then subsequently mixed with the vegetable oil. The mixture is heated until 50-60 degrees Celsius, and stirred. The mixture is precipitated and a glycerol fraction is separated from a fatty acid fraction of the vegetable oil. This step results in the production of a methyl ester (where methanol is used) or ethyl ester (where ethanol is used).

The methyl ester or ethyl ester is mixed with butanol to a final concentration of 2-15% butanol. Finally, an antioxidant is optionally added to prevent premature oxidation of the composition.

### Example 2

### Capillary transport, viscosity and flame point

Test of capillary transport, viscosity and flame point of petrol based lamp fuel and lamp fuels of the present invention.

Test performed in a Mag. Duo oil lamp with a 3 mm cotton wick.

| Composition | Capillary effect Cm | Viscosity cps | Flame point °C |
|---|---|---|---|
| Petrol based lamp oil | 12 | 2,5 | 80 |
| Methyl ester: C8 70%/C10 30% 5-16 % butanol | 9-11 | 3-5 | 55-80 |
| Methyl ester 100 % C6 | 15 | appr. 2 | 63 |
| Methyl ester 100 % C6 | 16 (fibre wick) | appr. 2 | 63 |

Test performed in a torch with a 10 mm cotton wick.

| Komposition | Capillary effect Cm | Viscosity cps | Flame point Centigrades °C |
|---|---|---|---|
| 50% bio diesel 1) 35% Methyl ester 100 % C6 15% Methyl ester C8 70%/C10 30% | Minimum 14 | appr. 4 | appr. 70 |

### Example 3; for reference only

### Preparation of biodiesel

Biodiesel may be prepared from any vegetable oil, as defined herein. For example, by the following method. First, 200 mL of canola oil was added to an round bottom flask and heated to 55° C. Then, 50 mL of methanol were added along with 2.9 g of sodium hydroxide. The mixture was heated and stirred for 40 minutes and then allowed to cool to room temperature. The reaction mixture was then washed with equal volumes of DI water five times. The water was separated from the reaction mixture. The solution was allowed to sit in the separatory funnel for 5 hours. During this time the glycerine (bottom layer) separated from the biodiesel (top layer). The biodiesel was then separated and collected.

### Example 4

Tests of smell of the liquid of different compositions of the present invention, the smell of the flame when the liquid is burned, the efficiency of capillary transport of the composition in different wick types and types of oil lamps in an unlit wick and when the fuel is burning from the wick.

The results are provided in the tables below.
Smell is estimated by a test person.
Capillary efficiency designate the extent of capillary transport in the wick, when the fuel is burning from the wick and when the wick is soaked in the fuel without burning, burning vs. suction, respectively.

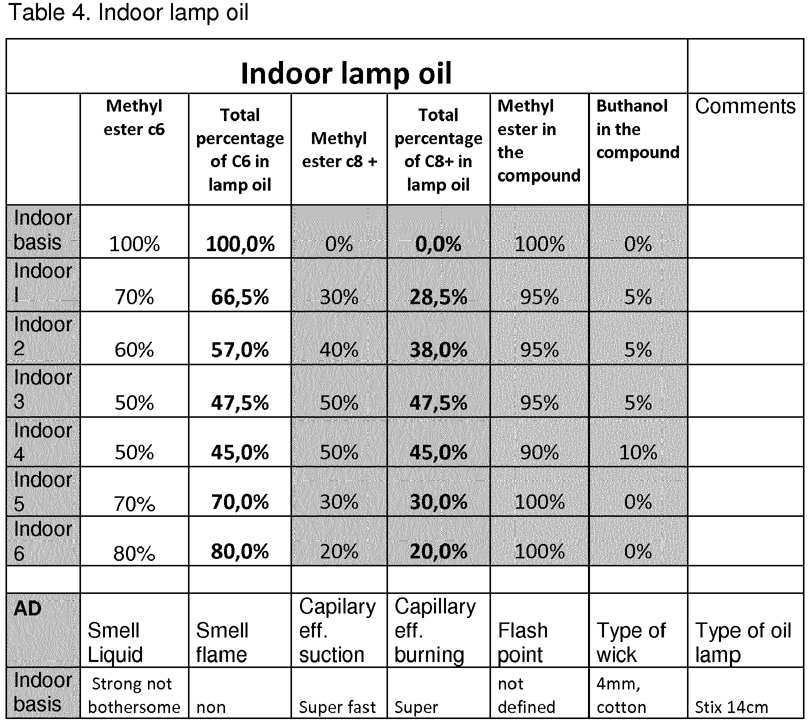

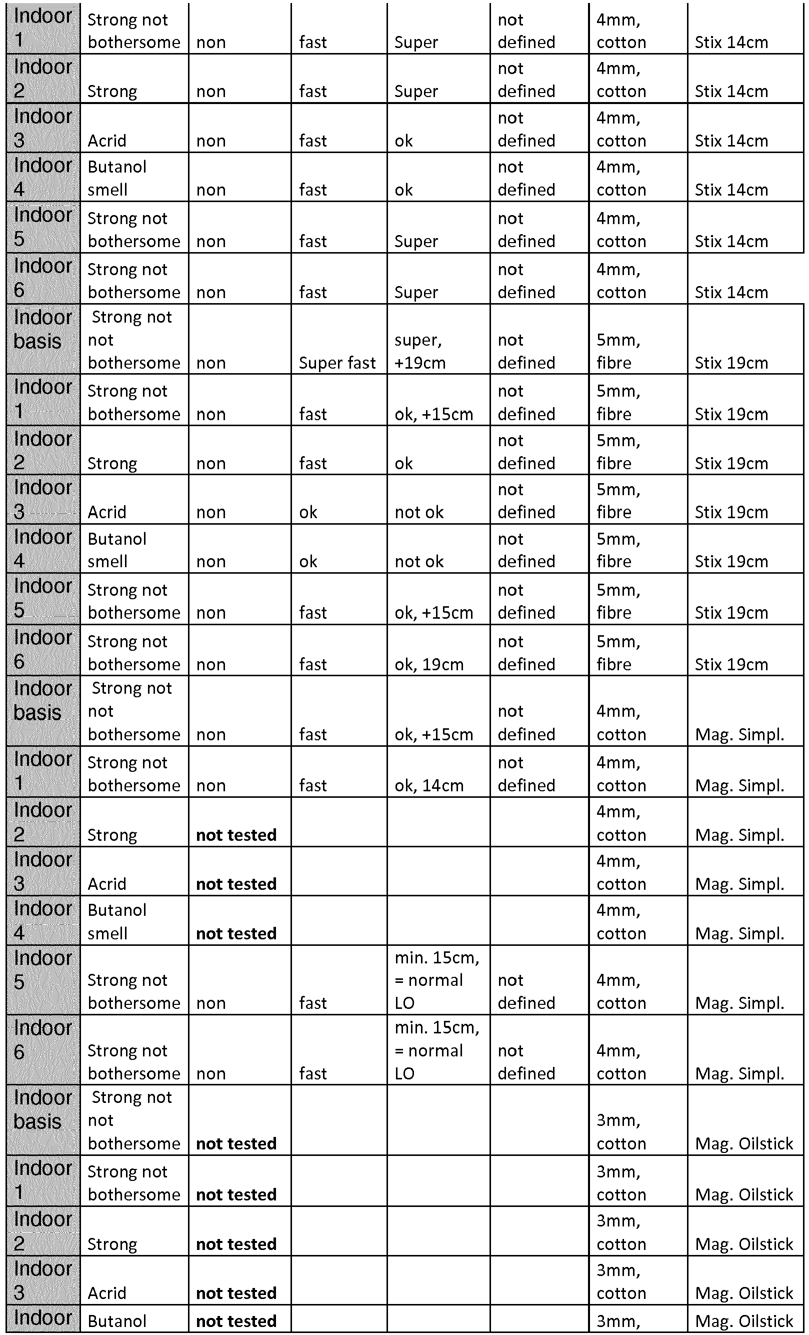

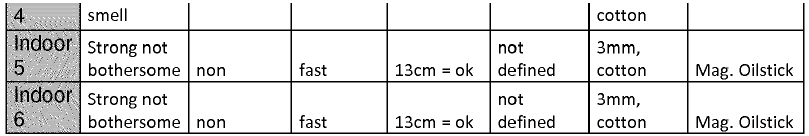

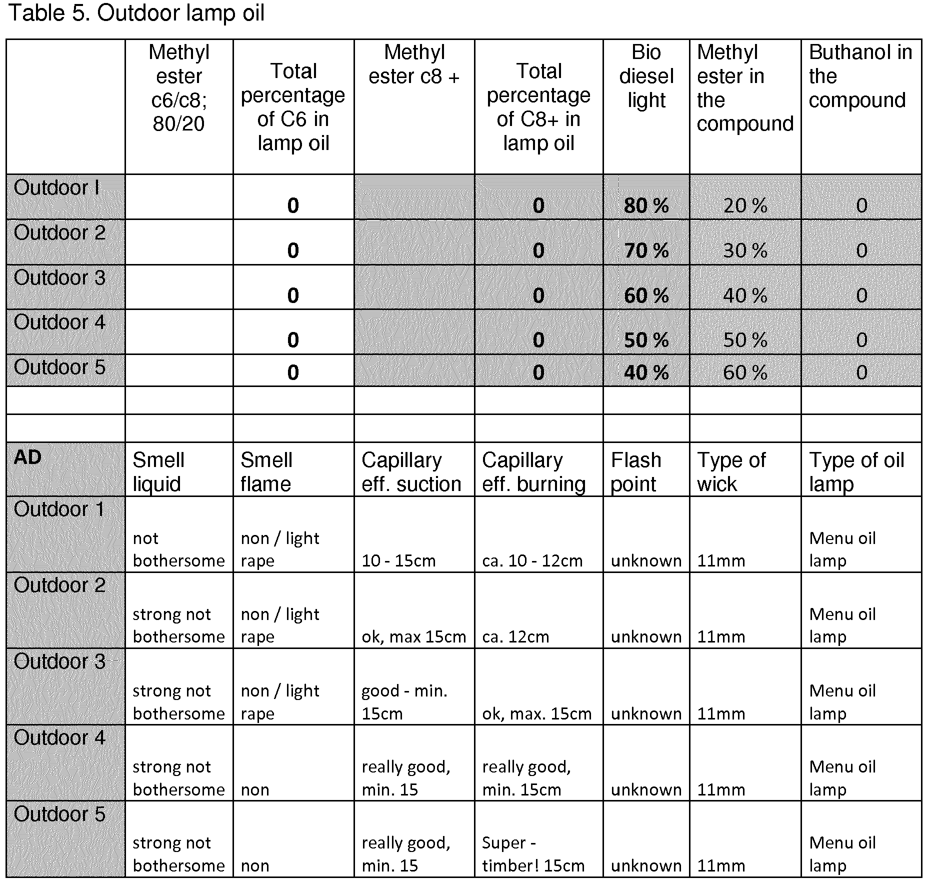

### Example 5

Test results for renewable and non-toxic lamp oil and lighter fuel.

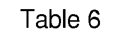

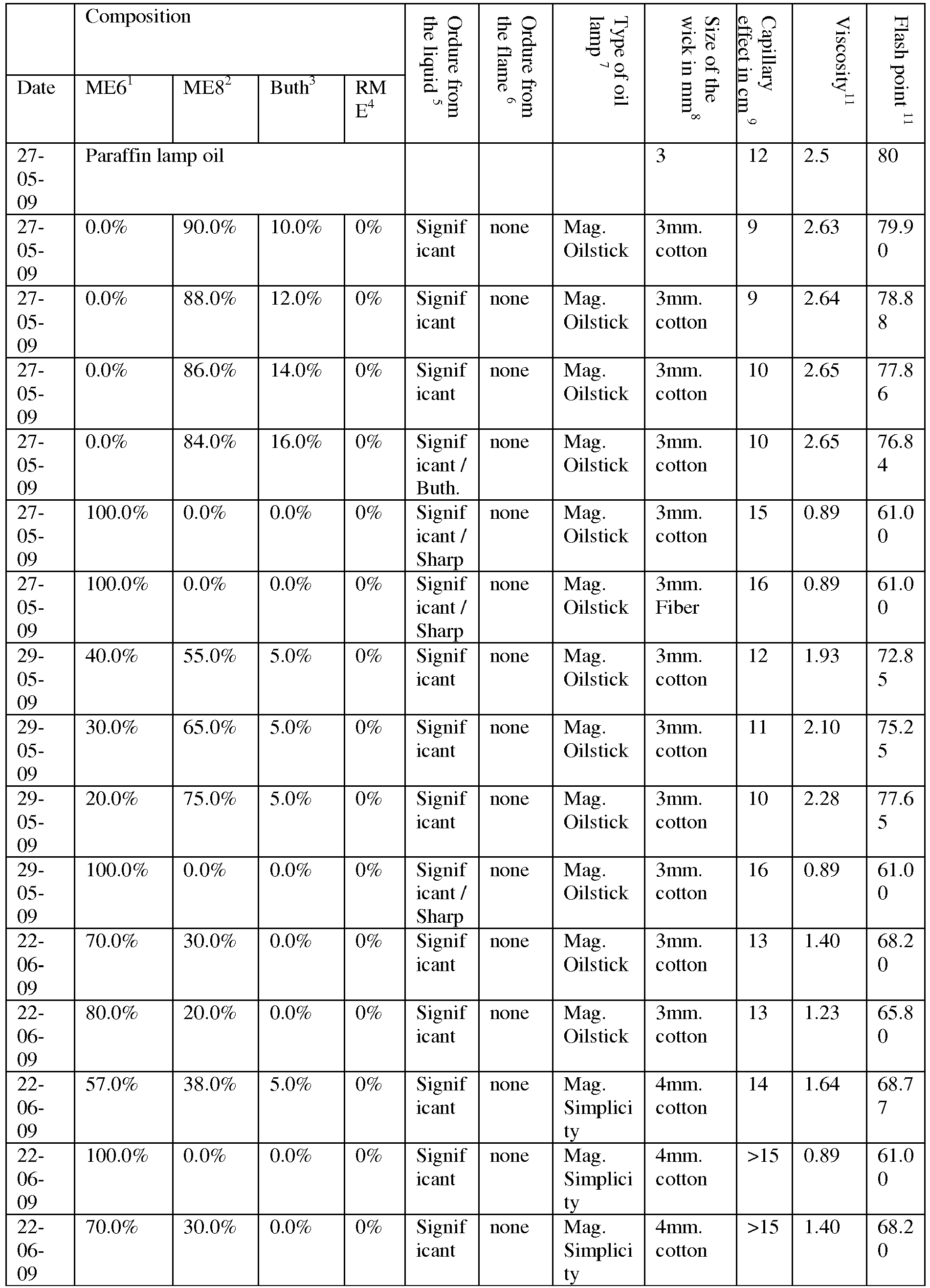

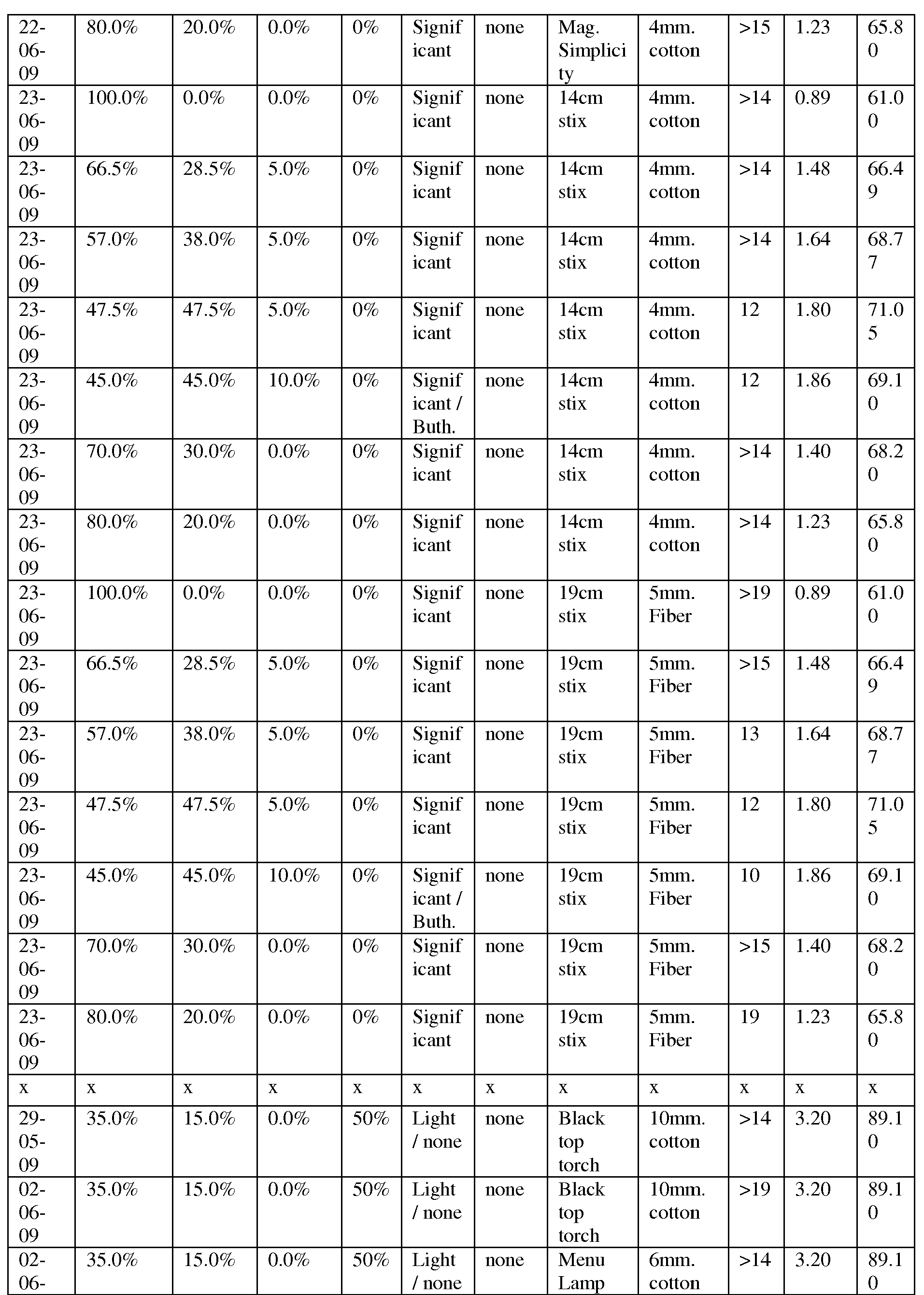

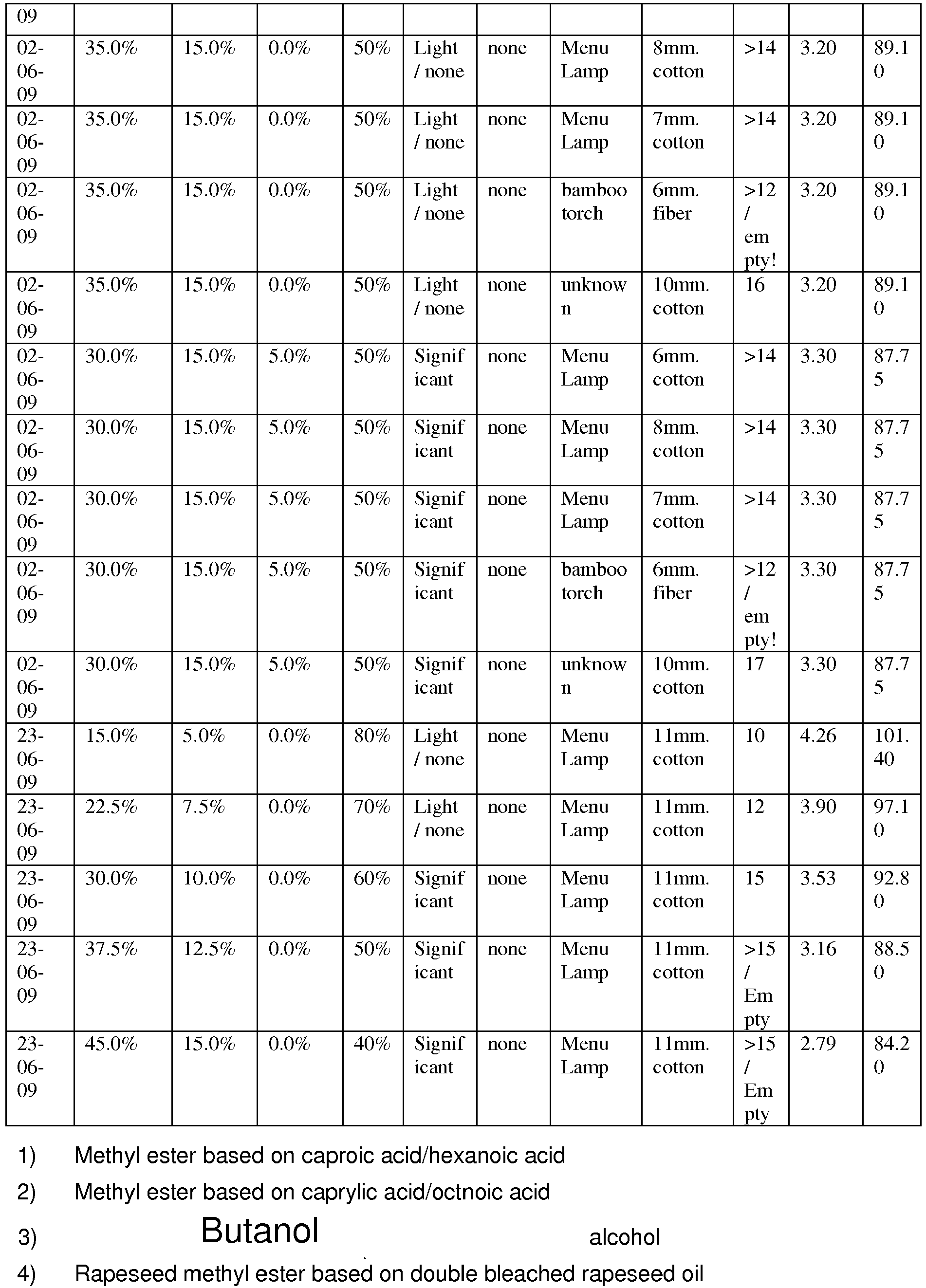

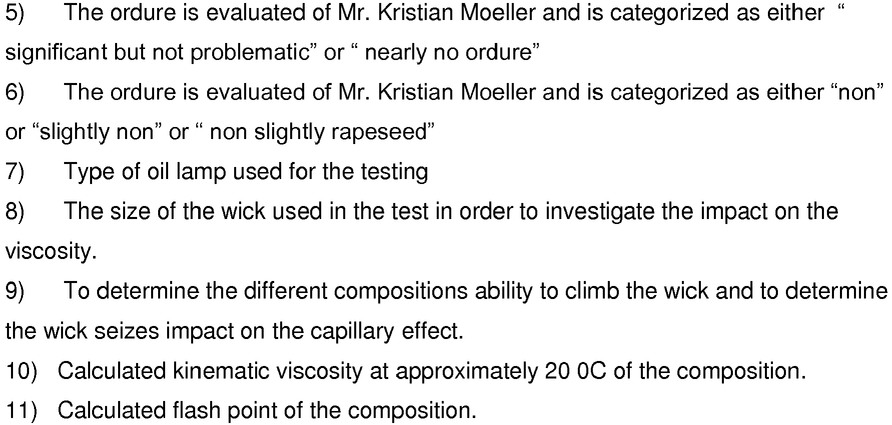

### Example 6; for reference only

Processing of crude vegetable oils to double bleached vegetable oil, and generation of methyl ester from double bleached vegetable oil.

### Step I:

In a first step, the crude vegetable oil may be subject to Delecithination/desliming Delecithination/ desliming of crude vegetable oil.
0,1 - 0,4 % phosphorus acid (75 %) is added into 80 degrees celsius heated crude oil under constant stirring in 30 minutes. The lecithin/slime is separated by filtration. Optionally 0.5 % bleaching clay may be added to the crude oil in order to ease the process.

### Step II:

Double bleaching/extensive bleaching of the crude vegetable oil.
The oil is heated to 260 degrees Celsius and added 2 -3 % bleaching clay and stirred under vacuum in 30 minutes. After the process the bleaching clay is separated by filtration.

### Step III:

Esterification of the crude oil into a fatty acid alcohol.

### Ingredients

1 litre crude double bleached/extensively bleached vegetable oil
200 ml Methanol
3,5 gram NaOH

The lye (NaOH) is mixed with the methanol and the crude vegetable oil is added. The mixture is heated up to 55 degrees celsius under steering and the steering remains in 30 minutes.
The mixture is separating into the fatty acid alcohol and glycerol, and after 8 hours the glycerol is drained from the bottom. To clean out the remaining lye from the fatty acid alcohol, the double amount of 45 degrees celsius hot water, calculated by the volume of fatty acid alcohol, is sprayed on the surface in order to absorb the lye. After 8 hours the water is drained from the bottom.

### Example 7

Emission tests of three different lamp oils in two different lamp types.
In this example, the soot emission from three different lamp oils - one conventional paraffin-based lamp oil, and an outdoor and an indoor lamp oil of the present invention was measured in two different types of lamp. The purpose of the tests is to show the soot emission of lamps fuelled with a lamp oil of the present invention compared with a paraffin-based lamp oil. The soot production of the lamp oils is tested using a well-defined method to describe the resulting particle concentration and size distribution in the range 5-225 nm.

### Materials

The tested lamp oils are a lamp oil of the present invention for indoor use and outdoor use respectively, and a conventional paraffin-based lamp oil.

Vegetable lamp oil (Agowa oil), methyl ester-based lamp oil, indoor
Flashpoint: 66 °C
Viscosity at ambient temperature (22°C): 2,2 cPs

Vegetable lamp oil (Agowa oil), methyl ester-based lamp oil, outdoor
Flashpoint: 72 °C
Viscosity at ambient temperature (22°C): 3,2 cPs

Reference oil, n-paraffin-based lamp oil, indoor:

| | | |
|---|---|---|
| Molecular Structure: | | |
| Name: | Alkanes, C10-14 | |
| CAS Number: | 93924-07-3 | 93924-07-3 |
| Molecular Formula: | C₁₂H₂₆ | |
| Molecular Weight: | 170.3348 | |
| Density: | 0..751g/cm³ | |
| Boiling Point: | 216.1°Cat1013 hPa | |
| Flash Point: | 71.1°C | |

### Soot emission

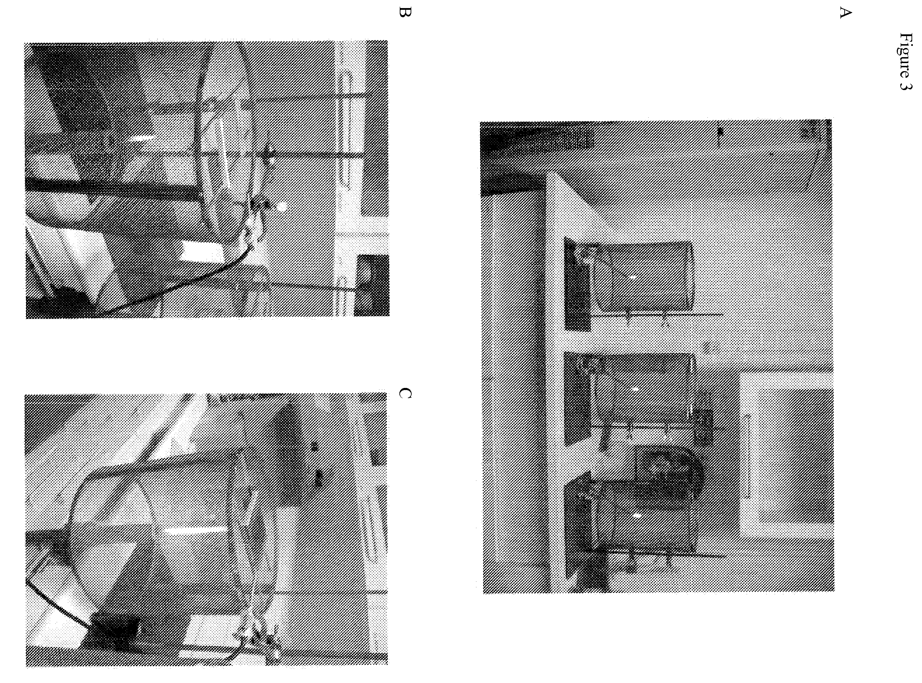

The lamp oil was tested according to the method contained in EN 15426:2007 Candles - Specification for sooting behaviour. The method was developed for the measurement of sooting (soot emission) from candles. The soot emitted during the burning of a lamp oil is collected on a glass plate over a defined burning period determined by the dimensions of the lamp. Subsequently the reduction of light intensity due to sooting is measured using a lux meter. An important element in the test is the height from the fuel to the collection plate which are both standardised. See also Figure 3.

### Measurement of particle concentration

Particle concentration and size distribution of particles in the range 5-225 nm were measurement with an SMPS (Scanning Mobility Particle Sizer) connected to a CPC (Condensation Particle Counter) - both instruments from TSI. The determination of size and concentration takes place by gathering particles at the same height over the flame as for the soot test. For all tests, the probe for the collection of sample air was mounted at the same distance from the glass plate as for the soot test. The measuring period was two minutes and determination of the particle concentration and size distribution was carried out three times for each set-up. This means that the results are an average of nine measurements for each lamp and oil type.

### Results

**Soot test**

| **Brand** | **Individual soot index** | **Soot index/h** |
|---|---|---|
| Agowa inside 3 | **0.1** | |
| Agowa inside 2 | **0.07** | 0.07 Si/h |
| Agowa inside 1 | **0.03** | |
| Agowa outside 3 | **0.37** | |
| Agowa outside 2 | **0.53** | 0.6 Si/h |
| Agowa outside 1 | **0.8** | |
| Ref. oil paraffin oil inside 3 | **174*** | |
| Ref. oil paraffin oil inside 2 | **204*** | 189 Si/h |
| Ref. oil paraffin oil inside 1 | **1366** | |
| Ref. oil paraffin oil inside 3 | **1366** | |
| Ref. oil paraffin oil inside 2 | **1514** | 1427 Si/h |
| Ref. oil paraffin oil inside 1 | **1402** | |

| | | |
|---|---|---|
| * only two of the burnings are included in the soot index calculation as individual burnings vary greatly. | | |

According to the EN 15426:2007 standard Candles - Specification for sooting behaviour the average soot index on the tested candles may not exceed 1.0 Si/h. No individual candle may exceed 2.0 Si/h.

### Conclusion

The soot indices show that the vegetable lamp oils of the present invention (Agowa oil), both indoors and outdoors, do not give rise to any significant sooting whereas the reference lamp oil supplied by the client produces significant sooting. The present invention is thus a considerable improvement over conventional lamp oils in terms of soot emission. The total particle concentration released during use of Agowa indoor and outdoor lamp oil was significantly less (by more than a factor of 10) than during use of the reference paraffin-based lamp oil. Particles released when using the outdoor Agowa lamp oil were fewer than particles released during use of the reference lamp oil based on paraffin. Moreover, very small particles in the 5-20 nm range were released when using Agowa outdoor lamp oil compared to use of the reference paraffin-based lamp oil.

## Claims

1. Use of a composition comprising 30-90% by weight of one or more methyl esters of C₈-C₁₀ carboxylic acids or mixtures thereof as a lamp fuel.

2. The use of a composition according to claim 1, wherein said composition has a melting point of less than 0°C.

3. The use according to any of the preceding claims, wherein said composition comprises 60-90% by weight of one or more methyl esters of C₈-C₁₀ carboxylic acids.

4. The use according to any of the preceding claims, wherein said composition comprises less than 5% by weight of any alkyl ester of a C₁₄ or any higher chain order carboxylic acid.

5. The use according to any of the preceding claims, wherein said composition comprises by weight 10-80% C₈ methyl esters, 10-80% C₁₀ methyl esters, 10-70% C₁₂ methyl esters, and/or 0-40% C₁₄ methyl esters.

6. The use according to any of the preceding claims, wherein at least 80% by weight of the alkyl esters are fully saturated.

7. The use according to any of the preceding claims, wherein said composition is liquid in the temperature range from 0-60 °C

8. The use according to any of the preceding claims, wherein said composition has a dynamic viscosity at 22°C, which is between 2.5 and 1 cP.

9. The use according to any of the preceding claims of a composition comprising by weight 15-25% C₈ methyl esters, 10-20% C₁₀ methyl esters, and/or 45-55% C₁₂ methyl esters, and/or 15-25% C₁₄ methyl esters as an outdoor lamp fuel.

## Patentansprüche

1. Verwendung einer Zusammensetzung, die 30-90 Gewichts-% eines oder mehrerer Methylester von C₈-C₁₀-Carbonsäuren oder Gemischen davon umfasst, als Lampenbrennstoff.

2. Verwendung einer Zusammensetzung nach Anspruch 1, wobei die Zusammensetzung einen Schmelzpunkt von unter 0 °C aufweist.

3. Verwendung nach einem der vorhergehenden Ansprüche, wobei die Zusammensetzung 60-90 Gewichts-% eines oder mehrerer Methylester von C8-C₁₀-Carbonsäuren umfasst.

4. Verwendung nach einem der vorhergehenden Ansprüche, wobei die Zusammensetzung weniger als 5 Gewichts-% eines Alkylesters einer C₁₄-Carbonsäure oder einer Carbonsäurekette höherer Ordnung umfasst.

5. Verwendung nach einem der vorhergehenden Ansprüche, wobei die Zusammensetzung 10-80 Gewichts-% C₈-Methylester, 10-80 Gewichts-% C₁₀-Methylester, 10-70 Gewichts-% C₁₂-Methylester und/oder 0-40 Gewichts-% C₁₄-Methylester umfasst.

6. Verwendung nach einem der vorhergehenden Ansprüche, wobei mindestens 80 Gewichts-% der Alkylester vollständig gesättigt sind.

7. Verwendung nach einem der vorhergehenden Ansprüche, wobei die Zusammensetzung im Temperaturbereich von 0-60 °C flüssig ist.

8. Verwendung nach einem der vorhergehenden Ansprüche, wobei die Zusammensetzung bei 22 °C eine dynamische Viskosität aufweist, die zwischen 2,5 und 1 cP liegt.

9. Verwendung nach einem der vorhergehenden Ansprüche einer Zusammensetzung, die 15-25 Gewichts-% C₈-Methylester, 10-20 Gewichts-% C₁₀-Methylester und/oder 45-55 Gewichts-% C₁₂-Methylester und/oder 15-25 Gewichts-% C₁₄-Methylester umfasst, als Außenlampenbrennstoff.

## Revendications

1. Utilisation d'une composition comprenant 30 à 90 % en poids d'un ou de plusieurs esters de méthyle d'acides carboxyliques en C₈-C₁₀ ou des mélanges de ceux-ci comme combustible pour lampe.

2. Utilisation de la composition selon la revendication 1, dans laquelle ladite composition a un point de fusion inférieure à 0 °C.

3. Utilisation selon l'une quelconque des revendications précédentes, dans laquelle ladite composition comprend de 60 à 90 % en poids d'un ou de plusieurs esters de méthyle d'acides carboxyliques en C₈-C₁₀.

4. Utilisation selon l'une quelconque des revendications précédentes, dans laquelle ladite composition comprend moins de 5 % en poids d'un quelconque alkyl ester d'un acide carboxylique d'une chaîne en C₁₄ ou d'ordre supérieur.

5. Utilisation selon l'une quelconque des revendications précédentes, dans laquelle ladite composition comprend de 10 à 80 % en poids d'esters de méthyle en C₈, de 10 à 80 % en poids d'esters de méthyle en C₁₀, de 10 à 70 % en poids d'esters de méthyle en C₁₂ et/ou de 0 à 40 % en poids d'esters de méthyle en C₁₄.

6. Utilisation selon l'une quelconque des revendications précédentes, dans laquelle au moins 80 % en poids des esters d'alkyle sont totalement saturés.

7. Utilisation selon l'une quelconque des revendications précédentes, dans laquelle ladite composition est liquide dans la fourchette de température de 0 à 60 °C.

8. Utilisation selon l'une quelconque des revendications précédentes, dans laquelle ladite composition a une viscosité dynamique à 22 °C, qui est entre 2,5 et 1 cP.

9. Utilisation selon l'une quelconque des revendications précédentes d'une composition comprenant de 15 à 25 % en poids d'esters de méthyle en C₈, de 10 à 20 % d'esters de méthyle en C₁₀, et/ou de 45 à 55 % d'esters de méthyle en C₁₂ et/ou de 15 à 25 % d'esters de méthyle en C₁₄ comme combustible pour lampe extérieure.
